# EUROPEAN PATENT APPLICATION

(11) **EP 4 770 182 A1**
(43) Date of publication of application: **01.07.2026**
(21) Application number: 23955123.7
(22) Date of filing: 11.10.2023
(51) Int. Cl.: H04W 24/10

(54) **INFORMATION PROCESSING METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN)
(74) Representative: Taor, Simon Edward William
(86) International application number: PCT/CN2023/124092
(87) International publication number: WO 2025/076740

(57) **Abstract**

Embodiments of the present disclosure provide an information processing method and apparatus, a terminal device, and a network device. The method includes: the terminal device determines the number of CSI processing unit(s) (CPU) occupied for a first CSI report and a time window occupied by the CPU(s), the first CSI report being an AI/ML-based CSI report.

## Description

### TECHNICAL FIELD

Embodiments of the present disclosure relate to the technical field of mobile communication, and particularly relate to information processing methods and apparatuses, a terminal device, and a network device.

### BACKGROUND

In view of the great success achieved by Artificial Intelligence (Al)/Machine Learning (ML) technology in computer vision, natural language processing and the like, the communication field has begun to attempt using AI/ML technologies to explore new technical approaches for solving technical problems that are restricted by regular methods.

The AI/ML-based Channel State Information (CSI) reporting involves compressing CSI at the transmitting end by using an encoder in the AI/ML model, and reconstructing CSI at the receiving end by using a decoder in the AI/ML model. The AI/ML-based solution utilizes the nonlinear fitting capability of neural networks to perform compressed feedback on CSI, which can significantly improve compression efficiency and feedback accuracy.

The terminal device may perform CSI reporting based on the CSI reporting configuration indicated by the network device. Single CSI reporting of the terminal device requires occupying a certain CPU. However, the computing/processing resources of the terminal device are limited, and there is currently no clear method for determining the CPU occupied for AI/ML model-based CSI reporting according to the computing/processing complexity, so as to maximize the utilization of the processing capability of the terminal device for CSI reporting within the computing capability range of the terminal device.

### SUMMARY

Embodiments of the present disclosure provide information processing methods and apparatuses, a terminal device, and a network device.

According to a first aspect, an information processing method according to an embodiment of the present disclosure includes that:
a terminal device determines the number of CSI processing unit(s) (CPU) occupied for a first CSI report and a time window occupied by the CPU(s), the first CSI report being an AI/ML-based CSI report.

According to a second aspect, an information processing method according to an embodiment of the present disclosure includes that:
a network device determines the number of CPU(s) occupied for a first CSI report and a time window occupied by the CPU(s), the first CSI report being an AI/ML-based CSI report.

According to a third aspect, an information processing apparatus according to the embodiment of the present disclosure is applied to a terminal device, and includes:
a first determining unit, configured to determine the number of CPU(s) occupied for a first CSI report and a time window occupied by the CPU(s), the first CSI report being an AI/ML-based CSI report.

According to a fourth aspect, an information processing apparatus according to an embodiment of the present disclosure is applied to a network device, and includes:
a second determining unit, configured to determine the number of CPU(s) occupied for a first CSI report and a time window occupied by the CPU(s), the first CSI report being an AI/ML-based CSI report.

According to a fifth aspect, a terminal device according to an embodiment of the present disclosure includes a processor and a memory. The memory is used for storing computer-executable instructions, and the processor is connected to the memory and is configured to implement the information processing method of the first aspect by running the computer-executable instructions.

According to a sixth aspect, a network device according to an embodiment of the present disclosure includes a processor and a memory. The memory is used for storing computer-executable instructions, and the processor is connected to the memory, and is configured to implement the information processing method of the second aspect by running the computer-executable instructions.

According to a seventh aspect, a chip according to an embodiment of the present disclosure is used for implementing the information processing method according to the first aspect or the second aspect.

Specifically, the chip includes a processor for calling and running a computer program from a memory to cause a device on which the chip is mounted to implement the information processing method of the first aspect or the second aspect described above.

According to an eighth aspect, an embodiment of the present disclosure provides a computer-readable storage medium which has stored a computer program that, when executed by at least one processor, implements the information processing method of the first aspect or the second aspect.

According to a ninth aspect, an embodiment of the present disclosure provides a computer program product which includes a computer storage medium that has stored a computer program including instructions executable by at least one processor, and when the instructions are executed by the at least one processor, the information processing method of the first or second aspect is implemented.

According to a tenth aspect, a computer program according to an embodiment of the present disclosure, when run on a computer, causes the computer to execute the information processing method of the first aspect or the second aspect described above.

The embodiments of the present disclosure provide the information processing methods. A terminal device and/or a network device may determine the number of CPU(s) required by first CSI report and a time window occupied by the CPU(s), thereby obtaining the processing capability required for the first CSI report. In this way, the terminal device may process the first CSI report according to its own processing capability and the processing capability required by the first CSI report, so as to efficiently utilize the CPU(s) of the terminal device and improve communication performance. Correspondingly, the network device may configure the terminal device to perform as many CSI calculations and/or CSI reports as possible on the premise of not exceeding the processing capability of the terminal device according to the processing capability required by the first CSI report, so as to improve communication performance.

### BRIEF DESCRIPTION OF THE DRAWINGS

The accompanying drawings described herein are intended to provide a further understanding of the present disclosure and constitute a part of the present disclosure, and the schematic embodiments of the present disclosure and the description thereof are intended to explain the present disclosure, and do not constitute an undue limitation to the present disclosure. In the drawings:
FIG. 1 is a schematic diagram of a communication architecture according to an embodiment of the present disclosure;
FIG. 2 is a schematic diagram of a CSI report method according to an embodiment of the present disclosure;
FIG. 3 is a schematic diagram of a neuron structure according to an embodiment of the present disclosure;
FIG. 4 is a schematic diagram of a structure of a neural network according to an embodiment of the present disclosure;
FIG. 5 is a schematic diagram of a neural network for CSI feedback according to an embodiment of the present disclosure;
FIG. 6 is a first schematic flowchart of an information processing method according to an embodiment of the present disclosure;
FIG. 7 is a second schematic flowchart of an information processing method according to an embodiment of the present disclosure;
FIG. 8A is a first schematic diagram of a CSI report timing relationship according to an embodiment of the present disclosure;
FIG. 8B is a second schematic diagram of a CSI report timing relationship according to an embodiment of the present disclosure;
FIG. 9A is a third schematic diagram of a CSI report timing relationship according to an embodiment of the present disclosure;
FIG. 9B is a fourth schematic diagram of a CSI report timing relationship according to an embodiment of the present disclosure;
FIG. 10 is a third schematic flowchart of an information processing method according to an embodiment of the present disclosure;
FIG. 11 is a fourth schematic flowchart of an information processing method according to an embodiment of the present disclosure;
FIG. 12 is a schematic diagram of the structure and composition of an information processing apparatus 1200 according to an embodiment of the present disclosure;
FIG. 13 is a schematic diagram of the structure and composition of an information processing apparatus 1300 according to an embodiment of the present disclosure;
FIG. 14 is a schematic structural diagram of a communication device according to an embodiment of the present disclosure;
FIG. 15 is a schematic structural diagram of a chip according to an embodiment of the present disclosure;
FIG. 16 is a schematic block diagram of a communication system according to an embodiment of the present disclosure.

### DETAILED DESCRIPTION

Hereinafter, the technical solution in the embodiments of the present disclosure will be described with reference to the accompanying drawings in the embodiments of the present disclosure, and it is obvious that the described embodiments are part of the embodiments of the present disclosure, but not all the embodiments. Based on the embodiments in the present disclosure, all other embodiments obtained by those skilled in the art without creative work shall fall within the scope of protection of the present disclosure.

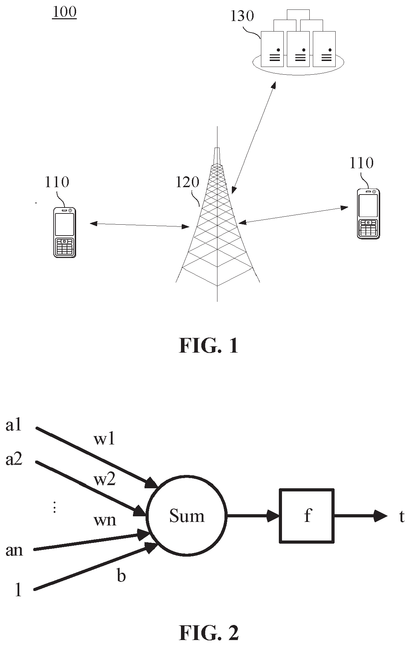

FIG. 1 is a schematic diagram of an application scenario according to an embodiment of the present disclosure.

As shown in FIG. 1, a communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are only illustrated with reference to the communication system 100, but the embodiments of the present disclosure are not limited thereto. That is, the technical solution of the embodiments of the present disclosure can be applied to various communication systems, such as a Long Term Evolution (LTE) system, an LTE Time Division Duplex (TDD) system, a Universal Mobile Telecommunication System (UMTS), an Internet of Things (IoT) system, and a Narrow Band Internet of Things (NB-IoT) system, an enhanced Machine-Type Communications (eMTC) system, a 5G communication system (also referred to as a New Radio (NR) communication system), or a future communication system, etc.

In the communication system 100 illustrated in FIG. 1, the network device 120 may be an access network device that communicates with the terminal device 110. An access network device may provide communication coverage for a particular geographic area and may communicate with the terminal device 110 (e.g., a UE) within that coverage area.

The network device 120 may be an Evolutional Node B (eNB or eNodeB) in a Long Term Evolution (LTE) system, or a Next Generation Radio Access Network (NG RAN) device, or a base station (gNB) in an NR system, or a radio controller in a Cloud Radio Access Network (CRAN), or the network device 120 may be a relay station, an access point, an in-vehicle device, a wearable device, a hub, a switch, a bridge, a router, or a network device in a future evolved Public Land Mobile Network (PLMN).

The terminal device 110 may be any terminal device including, but not limited to, terminal devices connected with the network device 120 or other terminal devices using wired or wireless connections.

For example, the terminal device 110 may refer to an access terminal, a User Equipment (UE), a subscriber unit, a subscriber station, a mobile station, a mobile station, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolutional network, or the like.

The terminal device 110 may be used for device-to-device (D2D) communication.

FIG. 1 exemplarily illustrates one base station, one core network device, and two terminal devices. Optionally, the wireless communication system 100 may include multiple base stations and another number of terminal devices may be included within the coverage range of each base station. No restriction is set in the embodiments herein.

It should be noted that FIG. 1 only illustrates a system applicable to the present disclosure in the form of an example, and the method shown in the embodiments of the present disclosure can also be applied to other systems. Further, the terms "system" and "network" are often used interchangeably herein.

It should be understood that the term "and/or" herein merely indicates an association relationship describing associated objects, and means that there may be three relationships, for example, A and/or B, which may mean that there are three cases: A exists alone, both A and B exist, and B exists alone. In addition, the character "/" herein generally indicates that the related objects before and after are in an "or" relationship.

It should also be understood that the "indicate" mentioned in the embodiments of the present disclosure may be a direct indication, an indirect indication, or an associated relationship. For example, A indicates B, which may mean that A directly indicates B, for example, B may be acquired by A; or A indicates B indirectly, for example, A indicates C, and B may be obtained through C; or there is an association relationship between A and B.

It should also be understood that "correspond" mentioned in the embodiments of the present disclosure may indicate that there is a direct correspondence or indirect correspondence between the two, or may indicate that there is a correlation relationship between the two, or may indicate a relationship between indicating and being indicated, configuring and being configured, or the like.

It should also be understood that the "predefined" or "predefined rules" mentioned in the embodiments of the present disclosure may be implemented by storing corresponding codes, tables in advance in devices (e.g., terminal devices and network devices), or other methods that can be used to indicate relevant information, and the present disclosure does not limit specific implementations thereof. For example, "predefined" may refer to defined in the protocol. It should also be understood that in the embodiments of the present disclosure, the "protocol" may refer to a standard protocol in the field of communication, and may include, for example, an LTE protocol, an NR protocol, and related protocols applied to future communication systems, which is not limited in the present disclosure.

In order to facilitate understanding of the technical solution of the embodiments of the present disclosure, the related technologies of the embodiments of the present disclosure will be described below, and the related technologies below can be arbitrarily combined with the technical solution of the embodiments of the present disclosure as options, and all of them belong to the scope of protection of the embodiments of the present disclosure.

CSI report is described below in detail.

In order to enable a network device to perform proper scheduling, a terminal device may transmit downlink CSI to the network device, so that the network device determines scheduling information of the terminal device, such as the number of transmission layers, a precoding matrix, a transmission beam, and a modulation and coding scheme, based on the downlink CSI. The CSI report of the terminal device is performed based on a CSI report configuration indicated by the network device, and the uplink resource used for the CSI report of the terminal device and the downlink reference signal used for CSI measurement are all indicated by the CSI report configuration.

In practical applications, each CSI report configuration may correspond to one CSI report, and each CSI report may include different information such as a channel state information reference signal resource indicator (CRI), a Rank Indicator (RI), a Precoding Matrix Indicator (PMI), a Channel Quality Indicator (CQI), and the like.

What content/information is included in the CSI may be determined by report quantity information (reportQuantity) in the CSI report configuration. The reportQuantity may indicate one of the following report quantities:

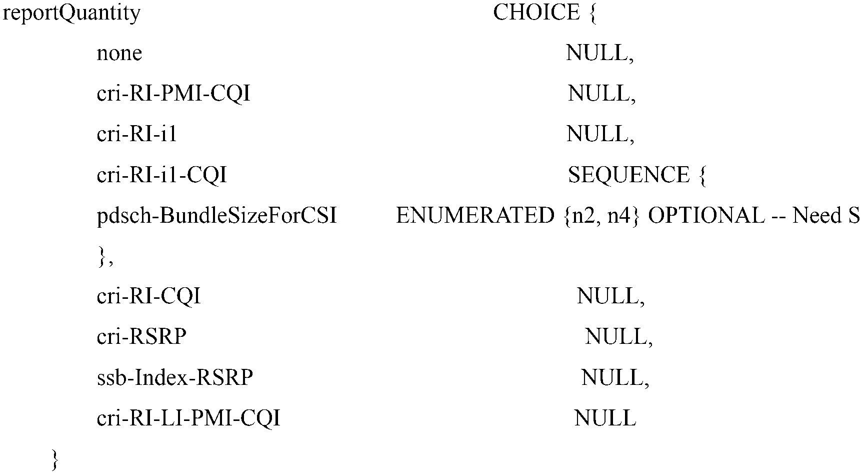

The CRI is used to determine a CSI-RS resource currently used for channel measurement and an Interference Measurement Resource (IMR) currently used for interference measurement from a plurality of CSI-RS resources.

The RI is used to report the recommended number of transmission layers.

The PMI is used to determine a recommended precoding matrix from a predefined codebook.

The CQI is used to report the current channel quality, which may be determined based on the SINR estimated by the terminal device. The channel component of the SINR is determined based on the non-zero capability CSI-RS configured by the network device for channel measurement, and the interference component is determined based on the CSI-IM or non-zero capability CSI-RS configured by the network device for interference measurement. The CQI is calculated based on the reported RI and PMI.

The Reference Signal Receiving Capability (RSRP) is used for reporting the RSRP of the SSB or CSI-RS corresponding to the fed-back index, and thus is used for the network side to determine a beam used for downlink transmission.

A Layer Indicator (LI) is used to report an index of a transmission layer associated with Phase Tracking Reference Signals (PTRS).

The CRI and RSRP are beam information and may be used for downlink transmission beam management; and other information is regular channel information (regular CSI) and may be used for precoding or link adaptation of downlink data. In order to support the downlink positioning function, the CSI may further include other positioning-related feedback information, such as channel capability information (such as Capability Delay Profile (PDP)), channel delay information, measured carrier phase information, channel impulse response (CIR) information, reception time information of reference signals, estimated position information, etc.

Note that each CSI report configuration may include one or more than one reportQuantity, and the one or more than one reportQuantity may cause the terminal device to feed back one or more than one CSI in the same CSI report. The terminal device may measure corresponding CSIs respectively according to a plurality of reportQuantities, and feed back CSI corresponding to at least one reportQuantity among the plurality of reportQuantities through the CSI report corresponding to the CSI report configuration.

In some embodiments, there may be three reporting manners for the the CSI report: periodic CSI report, quasi-persistent CSI report, and aperiodic CSI report. Referring to FIG. 2, periodic CSI report is transmitted on a Physical Uplink Control Channel (PUCCH), and the CSI report configuration thereof is configured by Radio Resource Control (RRC); and the terminal device periodically reports the CSI to the network device after receiving the corresponding RRC configuration.

The quasi-persistent CSI report may be transmitted on a PUCCH or a Physical Uplink Shared Channel (PUSCH). The CSI report configuration corresponding to the CSI transmitted on the PUCCH may be pre-configured by RRC signaling and activated or deactivated by Media Access Control (MAC) layer signaling; and the CSI report configuration corresponding to the CSI transmitted on the PUSCH may be dynamically indicated (activated or deactivated) by Downlink Control Information (DCI). After receiving activation or indication signaling configured by the network device, the terminal device may periodically transmit CSI on the PUCCH or the PUSCH until the terminal device receives deactivation signaling.

The CSI report configuration corresponding to the aperiodic CSI report may be also pre-configured by RRC signaling, part of the configuration may be activated by MAC layer signaling, and then the CSI report configuration used for the CSI report may be indicated by CSI trigger signaling in DCI. After receiving the CSI trigger signaling, the terminal device may report the corresponding CSI on the scheduled PUSCH at one time according to the indicated CSI report configuration.

Neural network model is introduced below in detail.

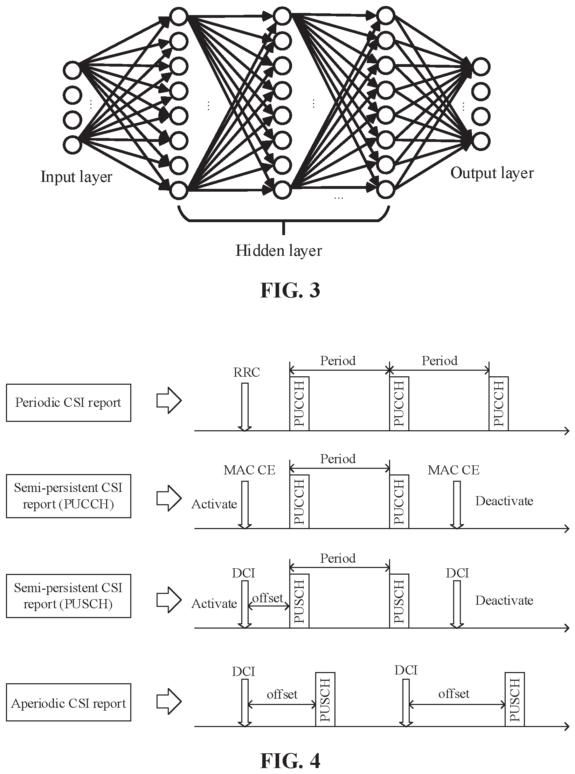

Neural network is an operation model composed of multiple neuron nodes connected to each other, in which the connection between nodes represents a weighted value from an input signal to an output signal, which is called weights; each node performs a weighted summation of different input signals and outputs a result through a specific activation function. Referring to the schematic diagram of the neuron structure shown in FIG. 3, wherein a1, a2,..., an and 1 are inputs of the neuron, w1, w2,..., wn and b represent weights, Sum represents a summation function, f represents an activation function, and t represents an output result.

A simple neural network, as shown in Figure 4, includes an input layer, a hidden layer and an output layer. Through different connection manners, weights and activation functions of multiple neurons, different outputs may be generated, and then a mapping relationship from input to output may be fitted. Each upper-level node is connected to all its lower-level nodes. This fully connected model may also be called DNN, that is, deep neural network.

A neural network model may be trained and obtained through a process including dataset construction, training, verification and testing. Training may be divided into offline training and online training. A static training result can be obtained through offline training of the dataset, which can be called offline training here. In the process of using the neural network model by the network device or the terminal device, with further measurement and/or reporting by the terminal device, the network device may continue to collect more data and perform real-time online training to optimize the parameters of the neural network model to achieve better inference and prediction results. After the neural network model is obtained, the corresponding model output can be obtained through inference by inputting the currently obtained information into the model.

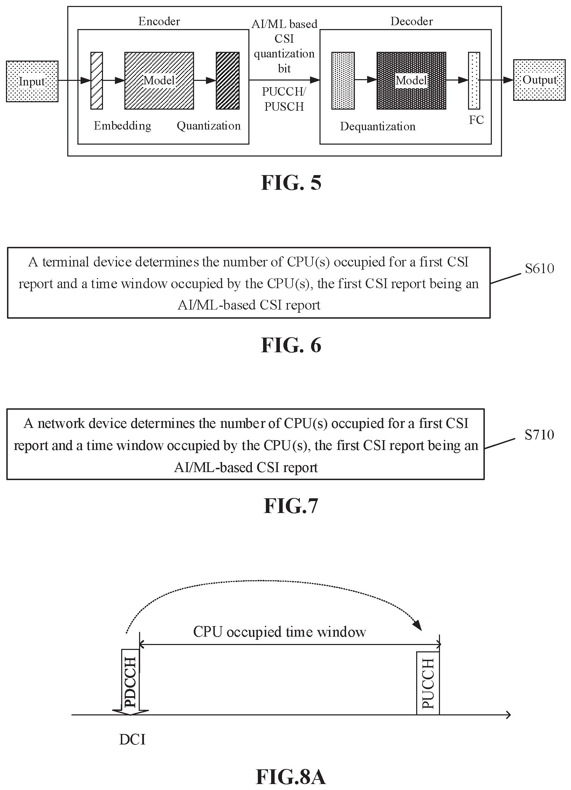

Referring to the neural network for CSI feedback shown in FIG. 5. A model for encoding (encoder) is deployed on the terminal device side, and a corresponding model for decoding (decoder) is deployed on the network device side. The terminal device outputs AI/ML-based CSI quantization bits, typically PMI bits, based on the encoder model, and then feeds them back to the network device through an uplink channel (PUSCH/PUCCH). The network device takes the CSI quantization bits fed back by the terminal device as the input of the decoder model, thereby outputting channel information corresponding to the input from the terminal device, such as a feature vector of each sub-band, for downlink precoding.

The terminal device also needs to monitor the model performance, and report it to the network device when the model performance does not meet a condition, so that the network device can update the model (such as updating the model structure or model parameters). Since the neural networks on both sides are matched, if the network updates the model, it is necessary to notify the terminal device through signaling to update the corresponding model, otherwise the result output by the network device is unavailable.

It can be understood that the terminal device may use one or more CSI processing units (also referred to as CPU) to process a CSI report, or that the terminal device needs to occupy one or more CPUs to process a CSI report corresponding to a CSI report configuration.

At present, the AI/ML model-based CSI report is not considered in the manner of calculating a CPU occupied for a CSI report. Since the computing/processing resources of the terminal device are limited, it is needed to consider how to determine a CPU occupied for the AI/ML model-based CSI report according to the computing/processing complexity, so as to maximize the utilization of the processing capability of the terminal device for the CSI report under the computing capability of the terminal device. In addition, different processing processes such as CSI feedback information inference based on AI/ML model, AI/ML model monitoring and online model training require different computational complexity and processing capabilities, and need to occupy different CPUs and adopt different occupation time instants. If the CSI reports configured by the network device exceed the number of CPU(s) supported by the terminal, the terminal cannot perform corresponding CSI calculation, and thus cannot perform reporting.

As such, an embodiment of the present disclosure provides an information processing method, in which a terminal device and/or a network device may determine the number of CPU(s) that need to be occupied for a first CSI report and a time window occupied by the CPU(s), thereby obtaining a processing capability required for the first CSI report. In this way, the terminal device can process the first CSI report according to its own processing capability and the processing capability required for the first CSI report, thereby efficiently utilizing the CPU(s) of the terminal device and improving communication performance. Accordingly, the network device may configure the terminal device to perform as many CSI calculations and/or CSI reports as possible according to the processing capability required for the first CSI report without exceeding the processing capability of the terminal device, so as to improve communication performance.

In order to facilitate understanding of the technical solution of the embodiments of the present disclosure, the technical solution of the present disclosure will be described in detail below with reference to specific examples. As an optional solution, the above related technologies can be arbitrarily combined with the technical solution of the embodiments of the present disclosure, and all of them belong to the scope of protection of the embodiments of the present disclosure. Embodiments of the present disclosure include at least some of the following contents.

FIG. 6 shows an information processing method according to an embodiment of the present disclosure, and the method may include the following steps.

At S610, a terminal device determines the number of CPU(s) occupied for a first CSI report and a time window occupied by the CPU(s), the first CSI report being an AI/ML-based CSI report.

It should be understood that a network device may configure one or more AI/ML-based CSI reports for the terminal device. The AI/ML-based CSI report is configured by the network device, specifically, the terminal device may determine the AI/ML-based CSI report based on a CSI report configuration transmitted by the network device. In the embodiments of the present disclosure, the AI/ML-based CSI report is denoted as the first CSI report.

Note that the AI/ML-based CSI report may refer to CSI reporting completed by applying AI/M1 technology to a terminal device for performing CSI reporting. For example, the AI/ML-based CSI report may include feedback of relevant CSI based on the AI/ML model, feedback of CSI based on bilateral model compression, model monitoring of the AI/ML model which is used for generating CSI, online training of the AI/ML model which is used for generating CSI, and the like, which are not limited in the embodiments of the present disclosure.

In the embodiments of the present disclosure, the AI/ML-based CSI report may also be referred to as an AI model-based CSI report, an ML model-based CSI report, or an AI/ML model-based CSI report.

In some embodiments, the first CSI report may be implemented based on a first model. In other words, the first model may be used to implementing the first CSI report.

Exemplarily, the first model may generate/infer CSI. The CSI may be compressed channel information, such as RI/PMI/CQI information, and may be used for scheduling of network devices; or, the CSI may be beam information, such as CRI/SSB index/RSRP information, for beam management; or, the CSI may be positioning information, such as UE location information, for determining a terminal location.

Exemplarily, the first model may be a model for encoder deployed on the terminal device side in the above-described embodiment.

Exemplarily, the first model may be trained by the terminal device through processes such as construction, training, verification, and testing of the dataset.

Exemplarily, the first model may be trained by the terminal device in advance by way of offline training and/or online training.

In some embodiments, the first model used for the first CSI report may be indicated by the terminal device to the network device, or the first model used for the first CSI report may be indicated by the network device to the terminal device. The terminal device or the network device may indicate a model function of the first model and/or a model ID of the first model. That is, the terminal device or the network device may determine the first model to be used for the first CSI report according to the indicated model function and/or model ID.

The model function is a function realized by the AI model, and the model function includes, but is not limited to, PMI reporting, RI/PMI/CQI reporting, beam information reporting, RSRP reporting, CSI compression, channel coding and decoding, modulation and demodulation, CSI prediction, CSI prediction and compression, and the like. The terminal device or the network device may determine the first model to be used according to the indicated model ID, and the terminal device or the network device may determine the first model to be used according to the indicated model function. In particular, one model function may correspond to a plurality of models, and in such a case, the terminal device or the network device may determine the first model based on both the model function and the model ID.

In some embodiments, before S610, the terminal device may receive a first signaling from the network device, and the first signaling may be used to trigger the first CSI report. That is, the first signaling may instruct the terminal device to report the first CSI based on the first model.

In some embodiments, the first signaling may be RRC signaling, MAC signaling, or DCI signaling. Accordingly, the first CSI report may be periodic CSI report, semi-persistent CSI report, or aperiodic CSI report.

The first CSI report may include a plurality of usages.

In some embodiments, the first CSI report may be used for feeding back CSI. It can be understood that the first CSI report is used for feeding back CSI, which specifically means that the terminal device transmits actual CSI through an uplink channel (for example, PUSCH or PUCCH).

As described above, the CSI may be compressed channel information, such as RI/PMI/CQI information, which may be used for scheduling of network devices. The CSI may also be beam information, such as CRI/SSB index/RSRP information, for beam management. The CSI may also be positioning information, such as UE location information, for determining a terminal location.

In some embodiments, the first CSI report may be used for performance monitoring of the first model. It can be understood that the terminal device may compare output information of the first model with reference label information, or compare output information of the first model with output information obtained by a non-AI/ML method, and by counting the comparison results a plurality of times, the terminal device may determine whether a model failure has occurred, and obtain a performance monitoring result.

The output information of the first model may be CSI in the above-described embodiments. For the sake of brevity, it will not be repeated here.

It should also be noted that the first CSI report is used for performance monitoring of the first model, which may be subdivided into the following two cases. In one case, the first CSI report may be used for feedback of a performance monitoring result of the first model, that is, the terminal device may report the performance monitoring result of the first model to the network device after completing the performance monitoring of the first model, that is, the terminal device may transmit the actual performance monitoring result through the uplink channel (PUSCH or PUCCH); the performance monitoring result may be an intermediate result of performance monitoring (for example, BLER, correlation, throughput, reliability, etc.), or may be indication information of whether the model has failed. In another case, the first CSI report is used for for performance monitoring of the first model and does not report performance monitoring results, that is, after receiving a trigger signaling of the first CSI report, the terminal device performs corresponding model monitoring, but does not feed back the performance monitoring result, for example, the reportQuantity configuration in the CSI report configuration corresponding to the first CSI report is set to None.

In some embodiments, the first CSI report may also be used for online training of the first model. It can be understood that the terminal device may perform online training based on the dataset collected by itself or the dataset indicated in advance by the network device, thereby optimizing and adjusting the parameters of the first model and improving the accuracy of output information of the first model.

When the first CSI report is used for online training of the first model, the first CSI report may not include actual transmission of CSI. After receiving the trigger signaling of the first CSI report, the terminal device performs corresponding online training, but does not need to feed back any information, and the trigger signaling is only used to trigger the online training process of the model. For example, when the first CSI report is used for online training of the first model, the reportQuantity in the CSI report configuration corresponding to the first CSI report may be configured to None or Training.

The output information of the first model may be CSI in the above-described embodiments. For the sake of brevity, it will not be repeated here.

In some embodiments, the first signaling triggers the first CSI report, and specifically triggers the terminal device to feed back CSI related to the first CSI report.

In some embodiments, the first signaling triggers the first CSI report, which may trigger the terminal device to perform performance monitoring of the first model, and report the performance monitoring result to the network device. Alternatively, when the first signaling triggers the first CSI report, the terminal device may be triggered to only perform performance monitoring of the first model without reporting the performance monitoring result of the first model.

In some embodiments, the first signaling triggers the first CSI report, and may also trigger the terminal device to perform online training on the first model.

In an embodiment of the present disclosure, after receiving the first signaling triggering the first CSI report, the terminal device may determine the number of CPU(s) occupied for the first CSI report and the time window occupied by the CPU(s).

Note that one or more CPUs occupied by the first CSI report may be included. When there are a plurality of CPUs, the plurality of CPUs may process the first CSI report at the same time, and thus, the time window occupied by each CPU of the plurality of CPUs occupied for the first CSI report is the same. That is, the time window of all CPUs occupied for the same CSI report is the same. However, for different CSI reports, the time windows of the occupied CPUs may be different.

Since CSI calculation and report in the embodiments of the present disclosure are obtained based on AI/ML model inference, the CPU for performing AI model inference/update may also be referred to as an AI processing unit.

It should also be noted that there may be one or more than one first CSI report, that is, the terminal device may currently be configured with a plurality of AI/ML-based CSI reports, for example, these CSI reports may be triggered by the same first signaling. In an embodiment of the present disclosure, the terminal device may determine the number of CPU(s) occupied for each first CSI report among the one or more than one first CSI report, and the time window of the CPU(s) occupied for each first CSI report.

By this method, the terminal device can determine the number of CPU(s) to be occupied for the first CSI report and the time window occupied by the CPU(s), thereby obtaining the processing capability required for the first CSI report. In this way, the terminal device can determine whether to process the first CSI report according to its own processing capability and the processing capability required for the first CSI report, thereby efficiently utilizing the CPU of the terminal device and improving communication performance.

FIG. 7 illustrates an information processing method according to another embodiment of the present disclosure, and the method may include the following step.

In S710, a network device determines the number of CPU(s) occupied for a first CSI report and a time window occupied by the CPU(s), the first CSI report being an AI/ML-based CSI report.

It should be understood that, similarly to the terminal device side, the network device may determine the number of CPU(s) occupied for the AI/ML-based CSI report configured for the terminal device and the time window occupied by the CPU(s), thereby obtaining the processing capability required for the AI/ML-based CSI report. In this way, the network device can configure the terminal device to perform as many CSI measurements and/or CSI reports as possible without exceeding the processing capability of the terminal device, so as to improve communication performance.

It should be noted that the related description of S710 can be understood with reference to the related description of S610 in the above-described embodiment, and will not be repeatedly described here for the sake of brevity.

In an embodiment of the present disclosure, the terminal device and/or the network device may determine the number of CPU(s) occupied for the first CSI report based on one or more of the following:
the number of inferences required for the first CSI report;
information content of the first CSI report;
model information of a first model; and
a usage of the first CSI report.

It can be understood that different processing processes such as inference of CSI feedback information based on AI/ML model, performance monitoring of AI/ML model, and online training of AI/ML model require different computational complexity and processing capabilities. Furthermore, the amount of calculation required for inference calculation for different CSI contents, different number of inference times, etc. is different, and the number of CPUs that need to be occupied is also different. Based on this, in the embodiments of the present disclosure, the terminal device and/or the network device may determine the number of CPU(s) that need to be occupied for the first CSI report based on one or more of followings: the number of inferences required for the first CSI report, the information content of the first CSI report, the model information of the first model, and the usage of the first CSI report.

In some embodiments, the terminal device and/or the network device may determine the number of CPU(s) occupied for the first CSI report based on the number of inferences required for the first CSI report. The number of CPU(s) occupied for the first CSI report is a product of the number of inferences required for the first CSI report (denoted as N) and a first value (denoted as X), where the first value X is the number of CPU(s) required to be occupied for the first model for one inference. That is, the number of CPU(s) occupied for the first CSI report is X * N. It should be understood that both N and X are integers greater than or equal to 1.

The value of X may be 1, or X may be reported to the network device by the terminal device through UE capability information.

In a possible implementation, the value of X is fixed to 1. Accordingly, the number of CPU(s) occupied for the first CSI report is N, and N is the number of times that the inference is required to be performed for the first CSI report based on the first model.

In another possible implementation, the value of X may be determined based on UE capability information reported by the terminal device to the network device. The UE capability information reported by the terminal device to the network device may include one or more of the following:
the number of CPU(s) that each AI/ML model among one or a plurality of AI/ML models supported by the terminal device needs to occupy for one inference, the one or the plurality of AI/ML models including the first model;
the number of CPU(s) that an AI/ML model corresponding to each model function among one or a plurality of model functions supported by the terminal device needs to occupy for one inference, the plurality of model functions including a model function of the first model; and
the number of CPU(s) required to be occupied for one inference for feeding back CSI and a number of CPU(s) required to be occupied for one inference for feeding back a model performance monitoring result, the first CSI report being used for feeding back the CSI or feeding back the model performance monitoring result.

In an implementation, the terminal device may support one or a plurality of AI/ML models.

Different AI/ML models have different inference complexity, and different AI/ML models need to occupy different number of CPUs for inference. Exemplarily, for model A, X = 1; and for model B, X = 2.

Based on this, the terminal device may determine X corresponding to the first model according to the first model used for the first CSI report. In addition, the terminal device may report the number of CPU(s) (that is, the first value X) occupied for each AI/ML model among the plurality of AI/ML models supported by the terminal device to the network device through UE capability information. In this way, the network device may determine the corresponding first value X according to the first model used by the terminal device for the first CSI report, thereby obtaining the number of CPU(s) occupied for the first CSI report.

It should be noted that the different AI/ML models described above may be identified by different model IDs. That is, the terminal device may report different first values X for different model IDs.

In another implementation, the terminal device may support one or a plurality of model functions. The model function may include functions such as positioning, beam management, CSI compression, CSI prediction, and the like, which are not limited in the embodiments of the present disclosure.

It should be understood that different AI/ML models are used for different model functions, and thus, the number of CPU(s) (i.e., the first value X) required to be occupied for different model functions for one inference is also different. Exemplarily, when the AI/ML model is used for positioning, X = 1; and when the AI/ML model is used for CSI prediction, X = 1.5.

Based on this, the terminal device may determine corresponding first value X according to the model function of the first model used for the first CSI report. The terminal device may aslo report the first value X corresponding to the one or the plurality of model functions supported by the terminal device to the network device through UE capability information. In this way, the network device may determine the corresponding first value X according to the first model used by the terminal device for the first CSI report.

In yet another implementation, for the same AI/ML model, the complexity of one inference for CSI feedback is different from the complexity of one inference for feedback of a model performance monitoring result, and thus, the number of CPU(s) occupied for one AI/ML model for one inference for CSI feedback is different from that for one inference for feedback of the model performance monitoring result feedback.

Based on this, the terminal device may determine corresponding first value X according to whether the first CSI report is used for feeding back CSI or feeding back a model performance monitoring result. In this case, the terminal device may report different first values X for one inference for CSI feedback and for one inference for model performance monitoring feedback, respectively. In this way, the network device may determine the corresponding first value X according to whether the first CSI report is used for feeding back the CSI or feeding back the model performance monitoring result.

When the terminal device reports the first value X through the UE capability information, the terminal device needs to consider its own computing capability. It should be understood that when the computing capability of the terminal device is strong, fewer CPUs are required to perform the same CSI processing; and when the computing capability of the terminal device is weak, more CPUs are needed.

In some embodiments, the terminal device and/or the network device may determine the number of CPU(s) occupied for the first CSI report based on the information content of the first CSI report.

The information content of the first CSI report may include one or more of followings:
compressed channel information, positioning information, beam information, and a performance monitoring result of the first model.

Note that the information content of the first CSI report may be other information for assisting the base station in downlink scheduling or downlink configuration, such as Doppler information, and the like, which are not repeated here.

It should be understood that the information content of the first CSI report may be information content output based on the first model, such as compressed channel information, positioning information, and beam information. The information content of the first CSI report may be a content obtained by processing the information content output by the first model, for example, a performance monitoring result of the first model.

It is noted that when the information content of the first CSI report is different, the complexity of processing the first CSI report by the terminal device is also different. In the embodiments of the present disclosure, the terminal device may determine the number of CPU(s) occupied for the first CSI report based on the information content of the first CSI report.

In some embodiments, the terminal device determines the number of CPU(s) occupied for the first CSI report based on the information content of the first CSI report, which may include one or more of the following:
when the information content of the first CSI report is positioning information, the number of the CPU(s) is a second value, the second value being a predefined value;
when the information content of the first CSI report is beam information, the number of CPU(s) is a third value, the third value being a predefined value;
when the information content of the first CSI report is compressed channel information, the number of the CPU(s) is a fourth value, the fourth value being calculated based on the number of reference signal resources used for CSI measurement; and
when the information content of the first CSI report is a performance monitoring result of the first model, the number of CPU(s) is the number of inferences performed by the terminal device based on the first model during the performance monitoring process, or is 0.

It should be noted that the second value and/or the third value may be fixed values, such as 1, 2, 3, etc., and the embodiments of the present disclosure are not limited thereto. The second value and the third value may be predefined or may be agreed in advance between the network device and the terminal device, which is not limited in the embodiments of the present disclosure.

When the information content of the first CSI report is compressed channel information, the terminal device needs to measure a reference signal associated with the first CSI report, and input the measurement result to the first model to obtain the compressed channel information. Therefore, when the information content of the first CSI report is compressed channel information, the number of CPU(s) occupied for the first CSI report is related to the number M of reference signal resource(s) used for CSI measurement (M is an integer greater than or equal to 1). For example, when the information content of the first CSI report is compressed channel information, the number of CPU(s) occupied for the first CSI report may be M or M + K, where K may be an integer greater than or equal to 1, for example K = 1.

When the information content of the first CSI report is the performance monitoring result of the first model, the number of CPU(s) occupied for the first CSI report may be the number of times the terminal device performs inference during the performance monitoring process of the first model. Alternatively, the number of CPU(s) occupied for the first CSI report may be 0, that is, the performance monitoring of the first model does not occupy additional CPU.

The terminal device and/or the network device may determine the number of CPU(s) occupied for the first CSI report in combination with the number of inferences required for the first CSI report and the information content of the first CSI report. That is, the above two methods of determining the number of CPU(s) occupied for the first CSI report may be used in combination. Specifically, the terminal device and/or the network device may determine both the number of CPU(s) occupied for the first CSI report based on the number of inferences required for the first CSI report and the information content of the first CSI report.

For example, when the information content of the first CSI report is compressed channel information and the number of inferences required for the first CSI report is N, the number of CPU(s) occupied for the first CSI report is N.

For example, when the information content of the first CSI report is the performance monitoring result of the first model and the number of inferences required for the first CSI report is N, the number of CPU(s) occupied for the first CSI report is 2N.

In some embodiments, the terminal device and/or the network device may determine the number of CPU(s) occupied for the first CSI report based on the model information of the first model. The model information of the first model may include one or more of the following:
a type of a neural network applied to the first model;
the number of layers of the neural network applied to the first model; and
a structure of the neural network applied to the first model.
It should be understood that different AI/ML models have different complexity due to different types, layers, and structures of neural networks employed. In practical applications, when determining the number of CPU(s) occupied for the first CSI report, it is also necessary to consider the complexity of inference of the first model.

The complexity of inference of the first model may be characterized by one or more of the followings: the type of the neural network applied to the first model, the number of layers of the neural network, and the structure of the neural network.

Exemplarily, types of neural networks may include feedforward neural networks, convolutional neural networks (CNN), recurrent neural networks (RNN), transformer networks (Transformers), generative adversarial networks (GAN), and the like. Different types of neural networks have different complexity of inference, so different types of neural networks may correspond to different numbers of CPUs.

Exemplarily, a neural network may be composed of different processing layers. When the number of layers of the neural network is less than a threshold of the number of layers, it may be considered that the complexity of inference of the first model applying the neural network is low, and accordingly, the number of CPU(s) occupied for the first CSI report may be 1; when the number of layers of the neural network is greater than or equal to the threshold of the number of layers, it can be considered that the complexity of inference of the first model applying the neural network is high, in which case the number of CPU(s) occupied for the first CSI report is 2.

Exemplarily, a large number of model parameters and neurons may be included in the structure of the neural network. The more model parameters and neurons the neural network includes, the more complex the neural network structure is. The terminal device may determine the number of CPU(s) occupied for the first CSI report according to the number of model parameters and neurons under the structure of the neural network applied to the first model.

The above three methods of determining the number of CPU(s) may be implemented in combination.

In an implementation, the terminal device may determine the number of CPU(s) occupied for the first CSI report based on both the number of inferences required for the first CSI report and model information of the first model. For example, when the number of inferences required for the first CSI report is N, and the number of layers of the first model is less than the threshold of the number of layers, the number of CPU(s) occupied for the first CSI report is N; when the number of inferences required for the first CSI report is N, and the number of layers of the first model is greater than or equal to the threshold of the number of layers, the number of CPU(s) occupied for the first CSI report may be 2N.

In another implementation, the terminal device may determine the number of CPU(s) occupied for the first CSI report based on both the information content of the first CSI report and the model information of the first model. For example, when the information content of the first CSI report is positioning information, and the model structure of the first model is a feedforward neural network, the number of CPU(s) occupied for the first CSI report is 2; when the information content of the first CSI report is compressed channel information, and the model structure of the first model is a feedforward neural network, the number of CPU(s) occupied for the first CSI report is M+1, and M may be the number of reference signal resources used for CSI measurement.

In yet another implementation, the terminal device may further determine the number of CPU(s) occupied for the first CSI report together based on the number of inferences required for the first CSI report, the information content of the first CSI report, and the model information of the first model. For example, when the number of inferences required for the first CSI report is N, the information content of the first CSI report is compressed channel information, and the number of layers of the first model is less than the threshold of the number of layers, the number of CPU(s) occupied for the first CSI report is N + M, and M may be the number of reference signal resources used for CSI measurement.

In some embodiments, the terminal device and/or the network device may determine the number of CPU(s) occupied for the first CSI report based on the usage of the first CSI report. The usage of the first CSI report includes one or more of the followings:
for feeding back CSI;
for performance monitoring of the first model; and
for online training of the first model.

It should be understood that the processing flow of the terminal device is different when the usage of the first CSI report is different, and thus the number of CPU(s) required is also different. When the terminal device determines the number of CPU(s) occupied for the first CSI report, the terminal device may also consider the usage of the first CSI report.

It should be noted that the relevant description of the first CSI report can be understood with reference to the description in the above-described embodiments, and will not be repeated here for the sake of brevity.

In some embodiments, the terminal device and/or the network device determines the number of CPU(s) occupied for the first CSI report based on the usage of the first CSI report, which may include that:
when the first CSI report is used for feeding back CSI, the number of the CPU(s) is calculated based on the number of reference signal resources used for CSI measurement; for example, the number of reference signal resources used for CSI measurement is denoted as M (M is an integer greater than or equal to 1), and when the first CSI report is used for feeding back CSI, the number of CPU(s) occupied for the first CSI report may be M or M + K, where K may be an integer greater than or equal to 1, for example K = 1;
when the first CSI report is used for performance monitoring of the first model, the number of CPU(s) is the number of times the terminal device performs inference based on the first model in the performance monitoring process; and
when the first CSI report is used for online training of the first model, the number of CPU(s) is a maximum number of CPU(s) simultaneously supported by the terminal device. That is to say, online training needs to occupy all CPU(s) (or full computing capability) of the terminal device.

When the first CSI report is used for performance monitoring of the first model, the number of CPU(s) occupied for the first CSI report may be the number of times the terminal device performs inference based on the first model during the performance monitoring process.

In addition, when the first CSI report is used for online training of the first model, the number of CPU(s) occupied for the first CSI report may be further determined according to the size of the dataset for online training of the first model. Exemplarily, the terminal device and the network device may pre-agree (or the network device may pre-configure for the terminal device) the number of CPU(s) corresponding to the sizes of different online datasets. The size of the dataset for online training may be linearly related to the number of occupied CPU(s), and the more data in the dataset for online training is, the more CPUs are requried; conversely, the less data in the dataset for online training is, the less CPU is required.

In some embodiments, the terminal device may determine the usage of the first CSI report according to the CSI report configuration corresponding to the first CSI report. For example, the usage thereof is directly configured in the first CSI report configuration, or the usage of the first CSI report is implicitly indicated by reportQuantity in the CSI report configuration.

The above four methods of determining the number of CPU(s) may be implemented in combination.

In an implementation, the terminal device may determine the number of CPU(s) occupied for the first CSI report based on both the information content of the first CSI report and the usage of the first CSI report. For example, when the information content of the first CSI report is positioning information, and the usage of the first CSI report is CSI feedback, the number of CPU(s) occupied for the first CSI report is 1; and when the information content of the first CSI report is compressed channel information, and the usage of the first CSI report is performance monitoring of the first model, the number of CPU(s) occupied for the first CSI report is M, where M may be the number of reference signal resources used for CSI measurement.

In yet another implementation, the terminal device may determine the number of CPU(s) occupied for the first CSI report based on both the model information of the first model and the usage of the first CSI report. For example, when the number of layers of the first model is less than a threshold of the number of layers, and the usage of the first CSI report is CSI feedback, the number of CPU(s) occupied for the first CSI report is the number M of reference signal resources used for CSI measurement; and when the number of layers of the first model is greater than or equal to the threshold of the number of layers, and the usage of the first CSI report is CSI feedback, the number of CPU(s) occupied for the first CSI report is M * 2.

In still another implementation, the terminal device may further determine the number of CPU(s) occupied for the first CSI report jointly based on the number of inferences required for the first CSI report, the information content of the first CSI report, the model information of the first model, and the usage of the first CSI report. For example, when the number of inferences required for the first CSI report is N, the information content of the first CSI report is compressed channel information, the number of layers of the first model is less than the threshold of the number of layers, and the usage of the first CSI report is performance monitoring of the first model, the number of CPU(s) occupied for the first CSI report is N + M, where M may be the number of reference signal resources used for CSI measurement.

It should be understood that in the above embodiment, the terminal device and/or the network device need to first determine the number of inferences required for the first CSI report, the information content of the first CSI report, the model information of the first model, and the usage of the first CSI report, and then determine the number of CPU(s) occupied for the first CSI report according to one or more of: the number of inferences required for the first CSI report, the information content of the first CSI report, the model information of the first model, and the usage of the first CSI report.

In another embodiment of the present disclosure, the first CSI report is used for online training of the first model, and the number of CPU(s) occupied for the first CSI report is determined according to the size of the dataset used for online training, or the number of CPU(s) occupied for the first CSI report is the maximum number of CPU(s) simultaneously supported by the terminal device.

As the parallel scheme of the previous embodiment, when the first CSI report is used for online training of the first model, the terminal device and/or the network device may directly determine the number of CPU(s) occupied for the first CSI report according to the size of the dataset for online training, or directly determine the number of CPU(s) occupied for the first CSI report as the maximum number of CPU(s) simultaneously supported by the terminal device, regardless of the number of inferences required for the first CSI report, the information content of the first CSI report, the model information of the first model, and the usage of the first CSI report.

That is, when the first CSI report includes CSI report for online training of the first model, the terminal device and/or the network device may efficiently and quickly determine the number of CPU(s) occupied for the first CSI report without caring about such information as the number of inferences required for the first CSI report, the information content of the first CSI report, the model information of the first model, and the usage of the first CSI report.

When the first CSI report is used for online training of the first model, the number of CPU(s) occupied for the first CSI report is the number of CPU(s) simultaneously supported by the terminal device, that is, the online training needs to occupy all CPU(s) (or full computing capability) of the terminal device.

When the first CSI report is used for online training of the first model, the number of CPU(s) occupied for the first CSI report may be further determined according to the size of the dataset for online training of the first model. Exemplarily, the terminal device and the network device may pre-agree on the number of CPU(s) corresponding to the sizes of different online datasets. The size of the dataset for online training may be linearly related to the number of occupied CPU(s), and the more data in the dataset for online training is, the more CPUs are required; conversely, the less data in the dataset for online training is, the less CPU is required.

In summary, in the information processing method provided by the embodiments of the present disclosure, for the CSI report based on AI/ML, the terminal device may determine the number of CPU(s) according to such information as the number of inferences required for the CSI report, the information content of the CSI report, the complexity of inference, and the usage of the CSI report. Further, the information processing method according to the embodiments of the present disclosure may be used to determine the number of CPU(s) required for online training of the CSI report based on AI/ML.

On the basis of the above embodiments, the terminal device and/or the network device may further determine a time window occupied by the CPU(s) occupied for the first CSI report. The terminal device may separately determine the time window occupied by the CPU(s) occupied for each CSI report. In this way, the terminal device may further determine whether the number of CPU(s) required for the CSI report exceeds the number of available CPU(s) in the occupied time window, and thus perform subsequent CSI processing.

The usage of the first CSI report is different, and the time window occupied by the corresponding CPU is also different. The terminal device and/or the network device may determine the time window occupied by the CPU(s) occupied for the first CSI report according to different usages of the first CSI report.

In some embodiments, when the first CSI report is used for feeding back CSI and/or feeding back a performance monitoring result of the first model, the time window occupied by the CPU(s) may be determined based on a periodic configuration of the first CSI report.

The periodic configuration of the first CSI report may be configured by the network device. Referring to FIG. 2, the periodic configuration of the first CSI report may include periodic CSI report, quasi-persistent CSI report, and aperiodic CSI report. The periodic configuration of the first CSI report may be determined by the CSI report configuration corresponding to the first CSI report.

It can be understood that the first CSI report is used for feedback of CSI or for feedback of a performance monitoring result of the first model, that is, the terminal device may transmit actual CSI or performance monitoring result through PUSCH/PUCCH. In this scenario, the terminal device and/or the network device may determine the time window occupied by the CPU(s) occupied for the first CSI report based on the periodic configuration of the first CSI report.

In a possible implementation, when the first CSI report is aperiodic report or the first CSI report is the first transmission in semi-persistent report, the time window occupied by the CPU(s) occupied for the first CSI report starts from a last time domain symbol carrying first signaling to the last time domain symbol of the uplink channel carrying the first CSI report. The first signaling is signaling for triggering the first CSI report.

It should be noted that the time domain symbol may be an Orthogonal Frequency Division Multiplexing (OFDM) symbol or other time domain symbol, which is not limited in the embodiments of the present disclosure.

For example, when the first CSI report is aperiodic report, the first signaling may be DCI signaling and carried by the PDCCH. Referring to FIG. 8A, when the first CSI report is aperiodic report, the time window occupied by the CPU(s) occupied for the first CSI report may start from the last OFDM symbol of the PDCCH that triggers the first CSI report to the last OFDM symbol of the PUSCH that carries the first CSI report.

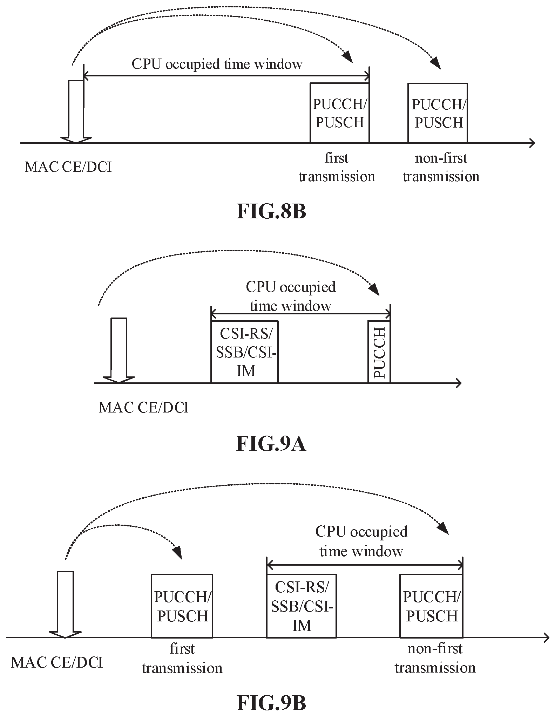

For example, when the first CSI report is semi-persistent report, the first signaling may be MAC CE signaling or DCI signaling. Referring to FIG. 8B, when the first CSI report is semi-persistent report and is the first transmission therein, the time window occupied by the CPU(s) that processes the first transmission of the first CSI report may start from the last OFDM symbol carrying the MAC CE signaling/DCI signaling to the last OFDM symbol of the PUCCH/PUSCH carrying the first CSI report.

In another possible implementation, when the first CSI report is periodic report, or the first CSI report is semi-persistent report and is not the first transmission, the time window occupied by the CPU(s) occupied for the first CSI report starts from the first time domain symbol of a first reference signal resource to the last time domain symbol of the uplink channel carrying the first CSI report. The first reference signal resource is a reference signal resource used for CSI measurement of the first CSI report.

The first reference signal resource may include one or more of a CSI-RS resource, an SSB resource, and a CSI-IM resource, which is not limited in the embodiments of the present disclosure.

For example, referring to FIG. 9A, when the first CSI report is periodic report, the time window of the occupied CPU(s) for the first CSI report may start from the first OFDM symbol of the CSI-RS/SSB/CSI-IM resource used for corresponding CSI measurement to the last OFDM symbol of the PUCCH used for the first CSI report.

For example, referring to FIG. 9B, when the first CSI report is semi-persistent report and is not the first transmission therein, the time window occupied by the CPU(s) that processes the first CSI report may start from the first OFDM symbol of the CSI-RS/SSB/CSI-IM resource used for the corresponding CSI measurement to the last OFDM symbol of the PUCCH/PUSCH carrying the first CSI report.

In some embodiments, when the first CSI report is used for performance monitoring of the first model and the terminal device does not report the performance monitoring result, the time window occupied by the CPU(s) occupied for the first CSI report starts from the first time domain symbol of a first reference signal resource to the K1-th time domain symbol after the last time domain symbol of the first reference signal resource. The first reference signal resource is a reference signal resource used for channel measurement of the first CSI report.

Alternatively, the time window occupied by the CPU(s) occupied for the first CSI report lasts for K2 time domain symbols from the last time domain symbol carrying a first signaling. The first signaling is used to trigger the first CSI report. Here, K1 and/or K2 are predefined values.

The first reference signal resource may include one or more of: a CSI-RS resource, an SSB resource, and a CSI-IM resource, which is not limited in the embodiments of the present disclosure.

It can be understood that the terminal device monitors the performance of the first model, which may specifically include that: the terminal device may perform measurement on the first reference signal resource, and input the measurement result into the first model for processing. Further, the output information of the first model is compared with reference label information, or the output information of the first model is compared with the output information obtained by a non-AI method to obtain the performance monitoring result of the first model. The terminal device may report the performance monitoring result to the network device, or determine whether a model failure has occurred at present (i.e., determine whether the current model is available) and whether online training is required according to the performance monitoring result.

Based on this, in an example, when the first CSI report is used for performance monitoring of the first model and there is no corresponding content to be reported, the time window occupied by the CPU(s) occupied for the first CSI report may be from the first OFDM symbol to the last OFDM symbol of the CSI-RS/SSB/CSI-IM resource used for channel measurement, and to the K1-th OFDM symbol after the last OFDM symbol.

Further, the performance monitoring of the first model by the terminal device may be triggered by the first signaling. For example, the first CSI report triggered by the first signaling is actually used for the terminal device to perform performance monitoring, in which case, there is no actual CSI transmission in the first CSI report (for example, reportQuantity is configured as None in the CSI report configuration corresponding to the first CSI report), but the terminal device needs to perform a performance monitoring process. Exemplarily, the first signaling may be DCI signaling. The first signaling may specifically trigger the terminal device to perform performance monitoring on the first model associated with the first CSI report.

It can be understood that after receiving the first signaling, the terminal device may perform performance monitoring on the first model in a periodic, semi-continuous, or aperiodic manner, and the terminal device may not report the performance monitoring result of the first model. Further, the terminal device may determine whether it is necessary to perform online training on the first model according to the performance monitoring result, and update the first model based on the result of the online training.

Based on this, in another example, when the first CSI report is used for performance monitoring of the first model and there is no corresponding content to be reported, the time window occupied by the CPU(s) occupied for the first CSI report lasts for K2 OFDM symbols starting from the last OFDM symbol of the PDCCH used to trigger the CSI report.

In some embodiments, when the first CSI report is used for online training of the first model, the time window occupied by the CPU(s) occupied for the first CSI report starts from a last time domain symbol carrying first signaling until the terminal device completes updating the first model based on the online training.

Alternatively, the time window occupied by the CPU(s) occupied for the first CSI report starts from the last time domain symbol carrying first signaling until the terminal device transmits a second CSI report to the network device based on an updated first model, the updated first model being obtained based on the online training process. The first signaling is used to trigger the first CSI report.

It should be noted that the first signaling is used to trigger the first CSI report, but the first CSI report is used for the terminal device to perform online training, and there may be no actual CSI transmission (for example, reportQuantity is configured as None or Training in the CSI report configuration corresponding to the first CSI report). Exemplarily, the first signaling may be DCI signaling.

It can be understood that after receiving the first signaling, the terminal device may perform online training on the first model, and update the first model according to the result of the online training to ensure the accuracy of the CSI output based on the first model.

That is, the time window occupied by the CPU(s) occupied for the first CSI report may start from the last OFDM symbol of the PDCCH used to trigger the first CSI report (that is, trigger online training) and end after the terminal device completes updating the model parameter of the AI model. Alternatively, the time window occupied by the CPU(s) occupied for the first CSI report may start from the last OFDM symbol of the PDCCH used to trigger the online training to the last OFDM symbol of the PUSCH carrying the second CSI report, where the second CSI report may be the CSI inferenced after the terminal device updates the parameters of the first model based on the online training.

In summary, in the information processing method provided by the embodiments of the present disclosure, for the CSI report based on AI/ML, the terminal device may determine the number of corresponding CPU(s) and the time window occupied by the CPU(s) according to such information as the number of inferences required for the CSI report, the information content of the CSI report, the complexity of inference, and the usage of the CSI report. Further, the information processing method according to the embodiments of the present disclosure may be used to determine the number of CPU(s) required for online training by the CSI report based on AI/ML and the time window occupied by the corresponding CPU(s).

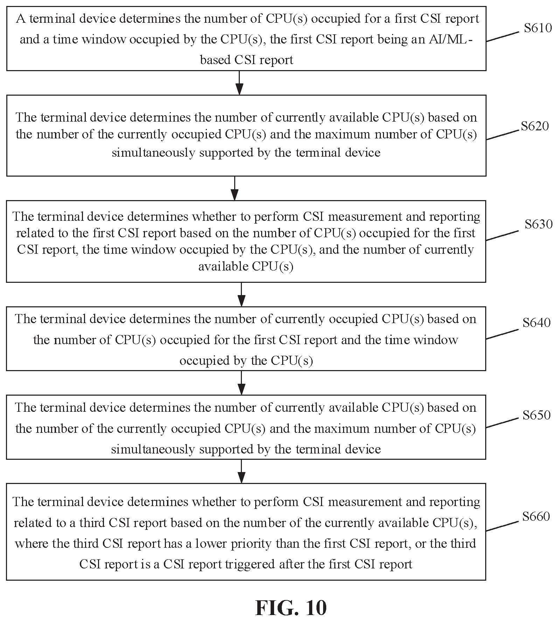

In an embodiment of the present disclosure, for the terminal device side, as shown in FIG. 10, after the terminal device determines the number of CPU(s) occupied for the first CSI report and the time window occupied by the CPU(s) in S610, the following steps may be further executed.

At S620, the terminal device determines the number of currently available CPU(s) based on the number of the currently occupied CPU(s) and the maximum number of CPU(s) simultaneously supported by the terminal device;
At S630, the terminal device determines whether to perform CSI measurement and reporting related to the first CSI report based on the number of CPU(s) occupied for the first CSI report, the time window occupied by the CPU(s), and the number of currently available CPU(s).

The terminal device may count the number of the currently occupied CPU(s) in the time window (denoted as L). In this way, based on the maximum number of CPU(s) (N_{MAX}) simultaneously supported by the terminal device, the number of CPU(s) available within the time window can be determined. The number of available CPU(s) is N_{MAX}-L.

It should be noted that the terminal device may count the number of CPU(s) occupied in each time slot (or OFDM symbol) in the time window in units of time slots (or OFDM symbols), and then obtain the number of CPU(s) available in each time slot (or OFDM symbol) in the time window, thereby determining whether to perform CSI measurement and reporting related to the first CSI report based on the number of CPU(s) available in each time slot (or OFDM symbol) within the time window.

In some embodiments, when the number of CPU(s) occupied for the first CSI report does not exceed the number of currently available CPU(s) within the time window, the terminal device may perform CSI measurement and reporting related to the first CSI report.

It can be understood that after determining the number N_{MAX}-L of CPU(s) available in the time window, the terminal device may compare the number of CPU(s) that need to be occupied for the first CSI report with the number of CPU(s) N_{MAX}-L available in the time window. When the number of CPU(s) occupied for the first CSI report does not exceed (less than or equal to) N_{MAX}-L, the terminal device may perform a CSI processing procedure corresponding to the first CSI report and occupy the corresponding CPU(s), for example, performing regular CSI measurement and CSI reporting.

It should be noted that the number of CPU(s) occupied for the first CSI report does not exceed N_{MAX}-L, which may be understood that the number of CPU(s) occupied for the first CSI report in each time slot (or OFDM symbol) in the time window does not exceed (less than or equal to) the number of CPU(s) available in the current time slot (or OFDM symbol). It can be understood that, in each time slot (or OFDM symbol) in the time window, when the number of CPU(s) occupied for the first CSI report does not exceed the number of CPU(s) available in the current time slot (or OFDM symbol), the terminal device may perform a CSI processing procedure corresponding to the first CSI report and occupy the corresponding CPU.

It should also be noted that there may be one or more than one first CSI report. It should be understood that when the total number of CPU(s) occupied for one or more than one first CSI report is less than or equal to the number N_{MAX}-L of CPU(s) currently available to the terminal device, the terminal device may perform regular CSI measurement and CSI reporting for each first CSI in the one or more than one first CSI report.

In some embodiments, in a case that there is one first CSI report, when the number of CPU(s) occupied for the first CSI report exceeds the number of currently available CPU(s) within the time window, the terminal device determines not to perform CSI measurement and reporting related to the first CSI report.

In a case that there are a plurality of first CSI reports, when the number of CPU(s) occupied for the plurality of first CSI reports exceeds the number of currently available CPU(s) within the time window, the terminal device only performs CSI measurement and reporting related to M first CSI reports having the highest priority among the plurality of first CSI reports;

M is a maximum value for a case where the number of CPU(s) occupied for M first CSI reports having the highest priority among the plurality of first CSI reports does not exceed the number of currently available CPU(s).

Note that, in the time window, the number of CPU(s) occupied for the first CSI report exceeds the number of CPU(s) currently available, which may be understood as that the number of CPU(s) occupied for the first CSI report in any one time slot (or OFDM symbol) in the time window exceeds the number of CPU(s) available in the current time slot (or OFDM symbol).

Assume that the number of the first CSI report(s) includes K, and K is an integer greater than or equal to 1.

When K = 1, and the number of required CPU(s) within the time window exceeds the currently available number N_{MAX}-L, the terminal device does not perform CSI measurement and CSI reporting corresponding to the first CSI report. For example, in any one time slot (or OFDM symbol) within the time window, if the number of required CPU(s) exceeds the number N_{MAX}-L of available CPU(s) in the current time slot (or OFDM symbol), the terminal device does not perform CSI measurement and CSI reporting corresponding to the first CSI report.

When K > 1, and the number of CPU(s) required to be occupied for K first CSI reports within the time window exceeds the number N_{MAX}-L of currently available CPU(s), the terminal device only performs CSI measurement and CSI reporting on M (M less than K) first CSI reports which have the highest priority, and does not perform CSI measurement and CSI reporting on other K-M first CSI reports. For example, in any one time slot (or OFDM symbol) within the time window, if the number of CPU(s) required to be occupied for K first CSI reports exceeds the number N_{MAX}-L of CPU(s) available in the current time slot (or OFDM symbol), the terminal device only performs CSI measurement and CSI reporting on M first CSI reports having the highest priority.

M is a maximum value for a case where the number of CPU(s) occupied for M first CSI reports having the highest priority among the plurality of first CSI reports does not exceed the number of currently available CPU(s). That is, within the time window, the number of CPU(s) occupied for M first CSI reports having the highest priority among K first CSI reports does not exceed the number N_{MAX}-L of currently available CPU(s), and the number of CPU(s) occupied for M+1 first CSI reports having the highest priority among K first CSI reports exceeds the number N_{MAX}-L of currently available CPU(s).

In some embodiments, for the priority order of different CSI reports, the priority of a CSI report for triggering the terminal device to perform online training on the first model is higher than the priority of a CSI report for CSI obtained based on the first model; and/or the priority of a CSI report for performance monitoring of the first model is higher than the priority of a CSI report for the CSI obtained based on the first model.

It can be understood that the priority of the CSI report for online training of the first model is higher than the priority of the CSI report for the CSI obtained based on the first model, because the online training optimizes the first model, so the priority of the online training is higher than the CSI output by the first model, and if the first model is unreliable, the CSI output based on the first model is also unreliable/unavailable.

Since the performance monitoring is a prerequisite for ensuring the reliability of the first model, the priority of the performance monitoring is higher than the priority of the CSI output by the first model, and if the first model is unreliable, the output CSI is also unreliable/unavailable.

In summary, the terminal device may determine whether to perform CSI measurement and CSI reporting related to the first CSI report according to the number of CPU(s) occupied for the first CSI report and the time window occupied by the CPU(s), so as to perform CSI measurement and/or reporting as much as possible without exceeding the processing capability of the terminal device.

Based on the above embodiments, in an embodiment of the present disclosure, with reference to FIG. 10, after S630, the terminal device may further perform the following steps.

At S640, the terminal device determines the number of currently occupied CPU(s) based on the number of CPU(s) occupied for the first CSI report and the time window occupied by the CPU(s).

At S650, the terminal device determines the number of currently available CPU(s) based on the number of the currently occupied CPU(s) and the maximum number of CPU(s) simultaneously supported by the terminal device;
At S660, the terminal device determines whether to perform CSI measurement and reporting related to a third CSI report based on the number of the currently available CPU(s), where the third CSI report has a lower priority than the first CSI report, or the third CSI report is a CSI report triggered after the first CSI report.

It can be understood that, in addition to the processing method of determining the first CSI report, the terminal device may determine, based on the number of CPU(s) occupied for the first CSI report and the time window occupied by the CPU(s), a processing method of other CSI report (which is the third CSI report in the embodiments of the present disclosure) which has lower priority than the first CSI report and is triggered after the first CSI report.

The terminal device may determine the number of occupied CPU(s) in each time slot (or OFDM symbol) (denoted as H) based on the CPU(s) occupied for the first CSI report and the time window occupied by the CPU(s) for the first CSI report. Further, the terminal device may determine that the number N_{MAX}-H of CPU(s) currently available in each slot (or OFDM symbol) based on the maximum number N_{MAX} of CPU(s) simultaneously supported by the terminal device.

Further, the terminal device may determine whether to perform CSI measurement and reporting related to the third CSI report in the corresponding time slot (or OFDM symbol) based on the number N_{MAX}-H of currently available CPU(s).

In some embodiments, when the number of CPU(s) required for the third CSI report in the corresponding time slot (or OFDM symbol) does not exceed the number N_{MAX}-H available in the time slot (or OFDM symbol), the terminal device performs the CSI processing procedure corresponding to the third CSI report, and occupies the corresponding CPU(s), for example, performing regular CSI measurement and CSI reporting.

In some embodiments, when the number of CPU(s) required for the third CSI report exceeds the number N_{MAX}-H available in the corresponding time slot (or OFDM symbol), the terminal device only processes (CSI measurement and CSI reporting) M third CSI reports having the highest priority, and does not process the other third CSI reports, where M is a maximum value for a case where the number of CPU(s) occupied for the M third CSI reports with the highest priority among the plurality of third CSI reports does not exceed the number of currently available CPU(s).

When there is only one third CSI report, and the number of CPU(s) required for the third CSI report in a time slot (or OFDM symbol) exceeds the number N_{MAX}-H currently available in the time slot (or OFDM symbol), the terminal device does not need to perform CSI measurement and CSI reporting corresponding to the third CSI report.

When the number of CPU(s) required for the third CSI report exceeds N_{MAX}-H, the terminal device may not perform corresponding CSI measurement, but the terminal device may still perform reporting. The reported content is the same as the previous content (that is, it does not need to occupy a CPU for processing, and only the last reported content is repeatedly transmitted).

In an embodiment of the present disclosure, the first CSI report is used to trigger performance monitoring of the first model, and the information processing method provided by the embodiment of the present disclosure may further include that:
when the number of CPU(s) currently available in the time window is less than the number of CPU(s) required for performance monitoring of the first model, the terminal device determines not to perform performance monitoring of the first model.

It should be noted that the number of CPU(s) currently available in the time window is less than the number of CPU(s) required for performance monitoring of the first model, which may be understood as that the number of CPU(s) available in any one time slot (or OFDM symbol) in the time window is less than the number of CPU(s) required for performance monitoring of the first model in the time slot (or OFDM symbol). It should be understood that as long as the number of CPU(s) available to the terminal device in any one time slot (or OFDM symbol) within the time window is less than the number of CPU(s) required for performance monitoring of the first model in the time slot (or OFDM symbol), the terminal device may not perform performance monitoring on the first model.

It should also be noted that the number of CPU(s) currently available in the time window in this embodiment may be the number allocated based on the priority level of a CSI report. That is, the number of currently available CPU(s) may be the number of CPU(s) remained after the terminal device allocates CPU(s) to other CSI reports having higher priority than the first CSI report.

In some embodiments, when the number of CPU(s) currently available in the time window is greater than or equal to the number of CPU(s) required for performance monitoring of the first model, the terminal device performs regular performance monitoring on the first model.

It should be noted that the number of CPU(s) currently available in the time window is greater than or equal to the number of CPU(s) required for performance monitoring of the first model, which may be understood as that the number of CPU(s) available for each time slot (or OFDM symbol) in the time window is greater than the number of CPU(s) required for performance monitoring of the first model. That is, when the number of CPU(s) available for each time slot (or OFDM symbol) in the time window is greater than the number of CPU(s) required for performance monitoring of the first model, the terminal device may perform regular performance monitoring on the first model.

In some embodiments, when CPU allocation is performed based on the priority of CSI reports, the priority of a CSI report used for performance monitoring of the first model is higher than the priority of a CSI report for the CSI obtained based on the first model. It should be understood that the priority of the CSI report for the performance monitoring of the first model is higher than the priority of the CSI report for the CSI obtained based on the first model. Since the performance monitoring is a prerequisite for ensuring the reliability of the first model, the priority of the performance monitoring is higher than the priority of the CSI output by the first model, and if the first model is unreliable, the output CSI is also unreliable/unavailable.

In some embodiments, the priority of the CSI report for performance monitoring of the first model is lower than the priority of a CSI report for other CSI, such as a CSI report for CSI obtained based on other AI models or a CSI report for CSI obtained based on a non-AI/ML manner (i.e., a regular manner).

In the information processing method according to the embodiment of the present disclosure, the terminal device may determine whether to perform the performance monitoring of the first model triggered by the first CSI report according to the number of CPU(s) occupied for the first CSI report and the time window occupied by the CPU(s), so as to reasonably perform the performance monitoring of the first model without exceeding the processing capability of the terminal device.

In an embodiment of the present disclosure, the first CSI report is used to trigger online training of the first model, and the information processing method provided by the embodiment of the present disclosure may further include that:
when the number of CPU(s) currently available in the time window is less than the number of CPU(s) required for online training of the first model, the terminal device determines not to perform online training on the first model.

It can be understood that when the first CSI report is used for online training of the first model, the terminal device may compare the number of CPU(s) required for online training of the first model with the number of currently available CPU(s) to determine whether to perform online training on the first model.

It should be noted that the number of CPU(s) currently available in the time window is less than the number of CPU(s) required for online training of the first model, which may be understood as that the number of CPU(s) available in any one time slot (or OFDM symbol) in the time window is less than the number of CPU(s) required for online training of the first model in the time slot (or OFDM symbol). It should be understood that as long as the number of CPU(s) available to the terminal device in any one time slot (or OFDM symbol) within the time window is less than the number of CPU(s) required for online training of the first model in the time slot (or OFDM symbol), the terminal device may not perform online training on the first model.

Note that the number of CPU(s) currently available in this embodiment may be the number allocated based on the priority level of a CSI report. That is, the number of currently available CPU(s) may be the number of CPU(s) remained after the terminal device allocates CPUs to other CSI reports having higher priority than the first CSI report.

In some embodiments, when the number of currently available CPU(s) is greater than or equal to the number of CPU(s) required for online training of the first model, the terminal device performs online training of the first model.

It should be noted that the number of CPU(s) currently available in the time window is greater than or equal to the number of CPU(s) required for online training of the first model, which may be understood as that the number of CPU(s) available for each time slot (or OFDM symbol) in the time window is greater than the number of CPU(s) required for online training of the first model. That is, when the number of CPU(s) available for each time slot (or OFDM symbol) in the time window is greater than the number of CPU(s) required for online training of the first model, the terminal device may perform online training on the first model.

In some embodiments, when the CPU allocation is performed based on the priority of CSI reports, the priority of a CSI report for triggering the terminal device to perform online training is higher than the priority of a CSI report for CSI obtained based on the first model. Since online training is to optimize the first model, the priority of online training is higher than the priority of the CSI output by the first model, and if the first model is unreliable, the output CSI is also unreliable/unavailable.

Further, in some embodiments, the priority of the CSI report for triggering the terminal device to perform online training is higher than all other CSI reports. Since online training may occupy all CPUs, its priority may be higher than all other CSI reports, and when the terminal device needs to perform online training, all other CSI calculations need to be stopped.

In particular, when the number of CPU(s) occupied for online training is the maximum number N_{MAX} of CPU(s) simultaneously supported by the terminal device, that is, all CPU(s) need to be occupied for online training of the first model, the terminal device performs the online training only when the number of the currently occupied CPU(s) is 0 (that is, no CPU is occupied), otherwise, the online training of the first model is not performed.

In the information processing method according to the embodiment of the present disclosure, the terminal device may determine whether to perform online training on the first model triggered by the first CSI report based on the number of CPU(s) occupied for the first CSI report and the time window occupied by the CPU(s), so as to reasonably perform online training on the first model without exceeding the processing capability of the terminal device.

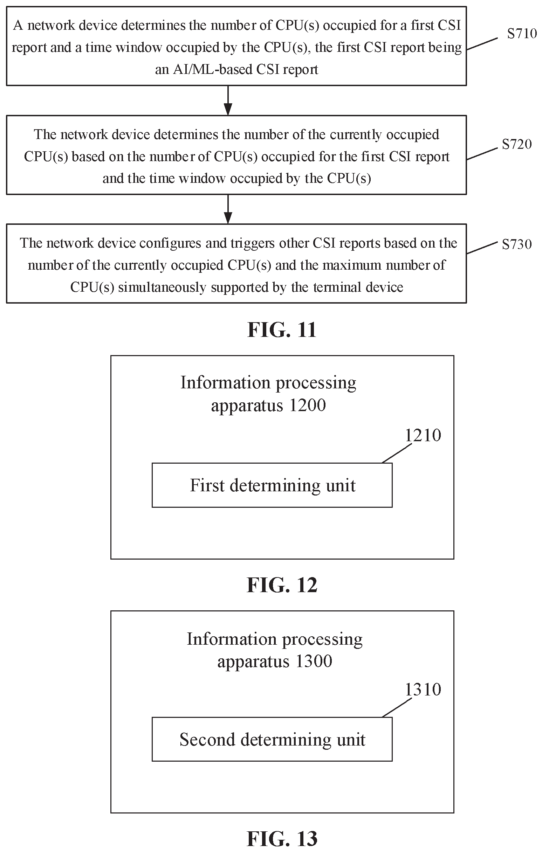

In an embodiment of the present disclosure, for the network device side, as shown in FIG. 11, after the network device determines the number of CPU(s) occupied for the first CSI report and the time window occupied by the CPU(s) in S710, the following steps may be further executed.

At S720, the network device determines the number of the currently occupied CPU(s) based on the number of CPU(s) occupied for the first CSI report and the time window occupied by the CPU(s);
At S730, the network device configures and triggers other CSI reports based on the number of the currently occupied CPU(s) and the maximum number of CPU(s) simultaneously supported by the terminal device.

It can be understood that the network device may determine the number of currently occupied CPU(s) (denoted as L) based on the number of CPU(s) occupied for the first CSI report and the time window occupied by the CPU(s) as determined in S710. Further, the network device may determine the number N_{MAX}-L of CPU(s) currently available to the terminal device based on the maximum number (denoted as N_{MAX}) of CPU(s) simultaneously supported by the terminal device. In this way, the network device may configure/trigger other CSI reports for the terminal device based on the number of CPU(s) currently available to the terminal device.

It should be noted that the network device may count the number of CPU(s) occupied in each time slot (or OFDM symbol) within the time window in units of time slots (or OFDM symbols), and then obtain the number of CPU(s) available in each time slot (or OFDM symbol) within the time window. In this way, the network device may configure/trigger other CSI reports for the terminal device based on the number of CPU(s) available in each time slot (or OFDM symbol) within the time window.

It should also be noted that the number of CPU(s) occupied for other CSI reports configured or triggered by the network device is not greater than the maximum number of CPU(s) simultaneously supported by the terminal device minus the number of the currently occupied CPU(s). That is, the number of CPU(s) occupied for other CSI reports configured/triggered by the network device to for the terminal device should not exceed the number N_{MAX}-L of CPU(s) currently available to the terminal device.

The maximum number N_{MAX} of CPU(s) simultaneously supported by the terminal device may be reported to the network device by the terminal device.

In some embodiments, the terminal device may transmit first information to the network device.

Accordingly, the network device may receive the first information from the terminal device. The first information is used to indicate the maximum number of CPU(s) simultaneously supported by the terminal device.

It should be noted that the first information may be UE capability information, and the first information may also be information dedicated to transmitting the maximum number, which is not limited in the embodiment of the present disclosure.

An embodiment of the present disclosure provides an information processing method, in which a terminal device and/or a network device may determine the number of CPU(s) required to be occupied for a first CSI report and a time window occupied by the CPU(s) required for the first CSI report, thereby obtaining a processing capability required for the first CSI report. In this way, the terminal device can process the first CSI report according to its own processing capability and the processing capability required for the first CSI report, thereby efficiently utilizing the CPU of the terminal device and improving communication performance. Accordingly, the network device may configure the terminal device to perform as much CSI calculation and/or CSI reporting as possible according to the processing capability required for the first CSI report without exceeding the processing capability of the terminal device, so as to improve communication performance.

Hereinafter, the information processing method provided by the embodiments of the present disclosure will be described in detail with reference to specific application scenarios.

An embodiment of the present disclosure provides a CSI processing method. For a CSI report based on AI/ML, the terminal device may determine the number of CSI processing unit(s) (CPU) and the corresponding occupation time of each CPU according to such information as the number of inferences required for the CSI report, the information content of the CSI report, model information of the AI/ML model, and the usage of the CSI report. Further, the method provided by the embodiment of the present disclosure may be used to determine the number of CPU(s) and the corresponding CPU occupation time required by the AI/ML-based CSI report for online training.

Since the number of inferences, information contents, model information of the AI/ML model, usage and the like required for the AI/ML-based CSI report are different, and the number of CPU(s) required to be occupied is also different, when different configurations are adopted for the AI/ML-based CSI report, the terminal device and the network device may determine the corresponding number of CPU(s) and CPU occupation time, so as to configure the terminal to perform as much CSI reporting as possible without exceeding the processing capability of the terminal.

### Embodiment 1

The Embodiment 1 may specifically include the following steps.

At S1, the terminal device reports the maximum number N_{MAX} of CPU(s) simultaneously supported to the network device through the UE capability information.

At S2, the terminal device receives a first signaling from the network device, and the first signaling is used for triggering the terminal device to implement CSI report based on AI/ML.

The first signaling may be RRC signaling, MAC signaling, or DCI signaling. Correspondingly, the CSI report based on AI/ML may be periodic CSI report, semi-persistent CSI report, or aperiodic CSI report.

In this embodiment, the AI/ML-based CSI report may be used for feedback of CSI or for feedback of a performance monitoring result of the AI/ML model. That is, the terminal device transmits actual CSI or performance monitoring result through a PUSCH or PUCCH.

In an implementation, the terminal device receives the first signaling from the network device, and the first signaling is specifically used to trigger the terminal to feed back CSI. The CSI may be compressed channel information, such as RI/PMI/CQI information, for scheduling of network devices. The CSI may also be beam information, such as CRI/SSB index/RSRP information, for beam management. The CSI may also be positioning information, such as UE location information, for determining a terminal location.

Note that the CSI is obtained by inference based on the AI/ML model deployed on the terminal device side.

In another implementation, the terminal device receives the first signaling from the network device, and the first signaling is specifically used to trigger the terminal device to perform performance monitoring on the AI/ML model, and reports a result of the performance monitoring to the network device.

For example, the terminal device performs performance monitoring on the AI/ML model by comparing output information of the AI/ML model with a reference label, or by comparing output information of the AI/ML model with output information obtained by a non-AI method. Through the statistics of multiple performance monitoring results, the terminal device may determine whether a model failure occurs, and thus send model failure information to the network device. That is, the result of the performance monitoring also includes the mode failure information.

At S3, the terminal device determines the number of CPU(s) occupied for the AI/ML-based CSI report.

The terminal device may determine the number of CPU(s) occupied for the AI/ML-based CSI report in any one of the following five manners.

Manner 1: The terminal device determines the number of CPU(s) occupied for the CSI report according to the number of inferences required for the CSI report based on AI/ML.

Assuming that the AI/ML-based CSI report requires N inferences performed based on the AI/ML model, the number of CPU(s) occupied for the CSI report is X * N. X is the number of CPU(s) required to be occupied for one inference that is performed based on the AI/ML model.

In an implementation, the value of X is fixed to 1. That is, the number of CPU(s) occupied for the AI/ML-based CSI report is N, and N is the number of times that the CSI report needs to perform inference based on the AI/ML model.

In another implementation, the value of X is reported to the network device through UE capability information.

The terminal device may report different X values for different model functions, or report different X values for different model IDs, or report different X values for feeding back CSI and feeding back a model performance monitoring result.

The model functions may include positioning, beam management, CSI compression, CSI prediction, and the like. Different AI/ML models with different complexity are used for different model functions, so different CPUs are required to be occupied. For example, when the AI/ML model is used for localization, X = 1; and when the AI/ML model is used for CSI prediction, X = 1.5.

In addition, the terminal device may report, through the UE capability information, a supported model (for example, reporting a model ID) and the number X of CPU(s) that each supported model (or model ID) needs to occupy for one inference. Since different models have different complexity of inference, different CPUs are required to be occupied. For example, X = 1 for Model 1, X = 3 for Model 2, and so on. When the terminal device acquires CSI using a certain AI/ML model, the number of CPU(s) can be determined.

The terminal device may report different X values, such as X1 and X2, for one inference for feeding back CSI and one inference for feeding back a model performance monitoring result, respectively. It should be understood that the computational complexity of one AI/ML model for feeding back CSI is different from that for feeding back a model performance monitoring result, and thus the CPUs required to be occupied in the two cases are also different. When the AI/ML model is used for feeding back CSI, the number of corresponding CPU(s) is X1; and when the AI/ML model model is used for feeding back a model performance monitoring result, the number of corresponding CPU(s) is X2.

It should be noted that when the terminal device reports the value of X, it needs to consider its own computing capability. When the computing capability of the terminal is strong, fewer CPUs are required to perform the same CSI processing; and when the computing capability of the terminal is weak, more CPUs are needed.

Manner 2: The terminal device determines the number of CPU(s) occupied for the CSI report according to the information content of the CSI report.

The information content of the CSI report may include one or more of the following: compressed channel information, positioning information, beam information, and performance monitoring results of the AI model. That is, when the information content of the CSI report is different, the number of CPUs required is also different. In addition, the information content of the CSI report may be other information for assisting the base station in downlink scheduling or downlink configuration, such as Doppler information, and the like, which will not be described herein.

For example, when the information content of the CSI report is positioning information, the number of occupied CPU(s) is 1;
when the information content of the CSI report is beam information, the number of occupied CPU(s) is 1;
when the information content of the CSI report is compressed channel information, the number of occupied CPU(s) is M or M+1, where M is the number of CSI-RS resources used for CSI measurement; and
when the information content of the CSI report is a performance monitoring result of the model, the number of CPU(s) occupied is the number of times the terminal device performs inference during the performance monitoring process, or it is fixed to 0 (that is, the performance monitoring does not occupy additional CPU).

Manner 3: The terminal determines the number of CPU(s) occupied for the CSI report according to the AI/ML model-based model information.

The terminal device may determine the number of CPU(s) occupied for the AI/ML-based CSI report according to the type of the neural network used in the AI/ML model or the number of layers of the neural network.

For example, different types of neural networks such as feedforward neural networks, convolutional neural networks (CNN), recurrent neural networks (RNN), Transformers, and generative adversarial networks (GAN) may correspond to different numbers of CPUs. For another example, when the number of layers of the neural network is less than a certain value, the number of occupied CPU(s) is 1; and when the number of layers of the neural network is greater than a certain value, the number of occupied CPU(s) is 2.

Manner 4: The terminal determines the number of CPU(s) occupied for the CSI report according to the usage of the CSI report.

The usage of the CSI report includes one or more of the following: for feeding back CSI, for performance monitoring of the AI/ML model, and for online training of the AI/ML model.

For example, when the CSI report is used for feeding back CSI, the number of occupied CPU(s) is 1. When the CSI report is used for performance monitoring of the AI/ML model, the number of occupied CPU(s) is the number of inferences performed by the terminal device during the performance monitoring process. When the CSI report is for online training of the AI/ML model, the number of occupied CPU(s) is the maximum number N_{MAX} of CPU(s) simultaneously supported by the terminal device, that is, the online training needs to occupy all CPU(s) (full computing capability) of the terminal device.

The terminal device may determine the usage of the CSI report according to the CSI report configuration corresponding to the CSI report. For example, the usage thereof is directly configured in the CSI report configuration, or the usage is implicitly indicated by reportQuantity in the CSI report configuration.

Manner 5: The number of CPU(s) may be directly reported by the terminal device to the network device through the UE capability information.

That is, the network device may obtain the number of CPU(s) without performing calculation based on the number of inferences, the information content of the CSI report, the model information of the AI/ML model, or the usage of the CSI report. When determining the number of CPU(s) occupied for the CSI report, the terminal device may take the number of inferences, the information content of the CSI report, the model information of the AI/ML model, or the usage of the CSI report into consideration and include them in the final reportQuality.

At S4, the terminal device determines a time window occupied by the CPU(s) occupied for the AI/ML-based CSI report.

When the AI/ML-based CSI report is used for feedback of CSI or when the AI/ML-based CSI report is used for feedback of a performance monitoring result of the AI/ML model, the terminal device may determine a time window occupied by the CPU(s) occupied for the CSI report according to the periodic configuration of the CSI report.

For example, as illustrated in FIG. 8A, the time window occupied by the CPU(s) occupied for the aperiodic CSI report transmitted by the PUSCH may start from the last OFDM symbol of the PDCCH that triggers the CSI report to the last OFDM symbol of the PUSCH that carries the CSI report.

Referring to FIG. 8B, for the first transmission of the semi-persistent CSI report, the time window occupied by the CPU(s) starts from the last OFDM symbol carrying the MAC CE signaling/DCI signaling to the last OFDM symbol of the PUCCH/PUSCH carrying the first CSI report.

Referring to FIG. 9A, when the CSI report is periodic report, the time window occupied by the CPU(s) may start from the first OFDM symbol of the CSI-RS/SSB/CSI-IM resource used for the corresponding CSI measurement to the last OFDM symbol of the PUCCH used for the CSI report.

Referring to FIG. 9B, when the CSI report is semi-persistent report and the CSI report is a non-first transmission, the time window occupied by the CPU(s) may start from the first OFDM symbol of the CSI-RS/SSB/CSI-IM resource used for the corresponding CSI measurement to the last OFDM symbol of the PUCCH/PUSCH carrying the CSI report.

At S5, the terminal device determines the number L of CPU(s) currently occupied according to the quality and the time window.

The terminal device may determine the number L of CPU(s) already occupied in each time slot or each OFDM symbol according to the number of CPU(s) occupied for the CSI report and the time window occupied by the CPU(s) occupied for the CSI report.

At S6, the terminal device determines whether to process subsequent other CSI report according to the number L of CPU(s) already occupied and the number N_{MAX} of CPU(s) simultaneously supported by the terminal device.

It should be noted that the subsequent other CSI report may be a CSI report triggered/configured (which may be understood as the third CSI report in the above embodiment) after the AI/ML-based CSI report in S2.

In some embodiments, when the number of CPUs required for these CSI reports does not exceed the currently available number N_{MAX}-L in the corresponding time slot or OFDM symbol, the terminal device may perform CSI processing corresponding to these CSI reports, and occupy the corresponding CPUs, for example, performing regular CSI measurement and CSI reporting.

In some embodiments, when the number of CPUs required for these CSI reports exceeds the currently available number N_{MAX}-L in the corresponding time slot or OFDM symbol, the terminal device may only process (CSI measurement and CSI reporting) the M CSI reports with the highest priority, and not process the other CSI reports, M being the maximum number of CSI reports that the N_{MAX}-L CPU(s) can simultaneously support. Here, the terminal device does not need to perform CSI measurement and CSI update for unprocessed CSI reports.

In particular, when the subsequent other CSI reports include only one CSI report, and the number of CPU(s) required for the CSI report in the corresponding time slot (or OFDM symbol) exceeds the number N_{MAX}-L currently available for the time slot (or OFDM symbol), the terminal device does not need to perform corresponding CSI measurement and CSI update (reporting is still possible, but the report content is the same as the previous content).

### Embodiment 2

The Embodiment 2 may specifically include the following steps.

At S1, the terminal device reports the number N_{MAX} of simultaneously supported CPU(s) to the network device through UE capability information.

At S2, the terminal device receives a first signaling from the network device, and the first signaling is used for triggering the terminal device to implement an AI/ML-based CSI report.

The first signaling may be RRC signaling, MAC signaling, or DCI signaling, and accordingly, the AI/ML-based CSI report may be periodic CSI report, semi-persistent CSI report, or aperiodic CSI report.

In the present embodiment, the AI/ML-based CSI report may be used for feeding back CSI or for feeding back a performance monitoring result of the AI/ML model. That is, the terminal device may transmit actual CSI or performance monitoring result through a PUSCH or PUCCH.

In an implementation, the terminal device receives a first signaling from the network device, and the first signaling is specifically used to trigger the terminal device to feed back CSI. The CSI may be compressed channel information, such as RI/PMI/CQI information, for scheduling of network devices. The CSI may also be beam information, such as CRI/SSB index/RSRP information, for beam management. The CSI may also be positioning information, such as UE location information, for determining a terminal location.

Note that the CSI is obtained by inference based on an AI/ML model deployed on the terminal device side.

In another implementation, the terminal device receives a first signaling from the network device, and the first signaling is specifically used to trigger the terminal device to perform performance monitoring of the AI/ML model, and report a result of the performance monitoring to the network device.

For example, the terminal device performs performance monitoring of the AI/ML model by comparing output information of the AI/ML model with a reference label, or by comparing output information of the AI/ML model with output information obtained by a non-AI method. Through the statistics of multiple performance monitoring results, the terminal device may determine whether a model failure occurs, and thus send model failure information to the network device. That is, the result of the performance monitoring also includes the mode failure information.

At S3, the terminal device determines the number of CPU(s) occupied for the AI/ML-based CSI report
It should be noted that, in S3, the terminal device determines the number of CPU(s) occupied for the AI/ML-based CSI report in the same manner as that in S3 of the Embodiment 1, and the description thereof is omitted here for the sake of brevity.

At S4, the terminal device determines a time window occupied by the CPU(s) occupied for the AI/ML-based CSI report.

The terminal device may determine a time window occupied by the CPU(s) according to a periodic configuration of the AI/ML-based CSI report when the CSI report is used for feedback of CSI or for feedback of a performance monitoring result of the AI/ML model.

It should be noted that, when the terminal device determines the time window occupied by the CPU(s), the description in Embodiment 1 can be referred to, and for the sake of brevity, the description will not be repeated here.

At S5, the terminal device determines whether to process the AI/ML-based CSI report according to the quantity and time window, the number L of currently occupied CPU(s), and the number N_{MAX} of CPU(s) simultaneously supported by the terminal device.

When the number of CPU(s) required for the CSI report does not exceed the number N_{MAX}-L of currently available CPU(s) within the time window, the terminal device may perform a CSI processing procedure corresponding to the CSI report, and occupy the corresponding CPU(s), for example, performing regular CSI measurement and CSI report.

When the CSI reports include K CSI reports, and the number of CPU(s) required in the time window exceeds the number N_{MAX}-L of currently available CPU(s), the terminal device may only process (CSI measurement and CSI reporting) the M CSI reports having the highest priority, and not process the other K-M CSI reports, where M is the maximum number of CSI reports that can be supported by the N_{MAX}-L CPU(s). For the unprocessed CSI report, the terminal device does not need to perform CSI measurement and reporting. In particular, when K = 1, and the number of CPU(s) required in the time window exceeds the number N_{MAX}-L of currently available CPU(s), the terminal does not perform CSI measurement and reporting corresponding to the CSI report.

### Embodiment 3

The Embodiment 3 may specifically include the following steps.

At S1, the terminal device reports the number N_{MAX} of simultaneously supported CPU(s) to the network device through UE capability information.

At S2, the terminal device receives a first signaling from the network device, the first signaling is used for triggering the terminal device to implement an AI/ML-based CSI report, and the CSI report is used for performance monitoring of the AI/ML model.

It can be understood that the AI/ML-based CSI report triggered by the first signaling is actually used for the terminal device to perform performance monitoring of the AI/ML of the CSI report, in which case, there is no actual CSI transmission in the CSI report, but the terminal device needs to perform a performance monitoring process. For example, in the CSI report configuration corresponding to the CSI report, reportQuantity is configured to None.

In this embodiment, after receiving the first signaling, the terminal device may periodically, semi-continuously, or aperiodically monitor the performance of the AI/ML model, but does not need to report the performance monitoring result. Further, the terminal device may determine whether online training is necessary according to the performance monitoring result, and update the AI/ML model based on the online training result.

At S3, the terminal device determines the number of CPU(s) occupied for the AI/ML-based CSI report (i.e., performance monitoring of the AI/ML model).

Note that, when the AI/ML-based CSI report is used for performance monitoring of the AI/ML model, the number of CPU(s) occupied for the CSI report is the number of inferences performed by the terminal device based on the AI/ML model during the performance monitoring process.

For example, every time a performance monitoring result is obtained, the terminal device needs to perform inference based on the AI/ML model to obtain an output of the model. By counting a plurality of performance monitoring results, the terminal device can determine whether the AI model is still available (whether a failure has occurred). The number of inferences the terminal device needs to perform during the performance monitoring process may be configured to the terminal device by the network device, for example, indicated by the CSI report configuration corresponding to the CSI report; or the number of inferences may be reported by the terminal device to the network device through the UE capability information, so that the network device may determine the number of CPU(s) that the terminal device needs to occupy for performance monitoring according to the number of inferences.

At S4, the terminal device determines a time window occupied by the CPU(s) of the AI/ML-based CSI report.

When the AI/ML-based CSI report is used for performance monitoring of the AI/ML model, and there is no corresponding report content, the time window occupied by the CPU(s) occupied for the CSI report is from a first OFDM symbol to a last OFDM symbol of the CSI-RS/SSB resource used for channel measurement, and further lasts for K1 OFDM symbols subsequent to the last OFDM sybmol; Alternatively, the time window lasts for K2 OFDM symbols starting from the last OFDM symbol of the PDCCH used to trigger CSI report. K1 and K2 are agreed in advance between the terminal and the network device.

At S5, the terminal device determines whether to perform performance monitoring of the AI/ML model based on the quantity and time window.

After the allocation is performed based on the priority level of the CSI report, if the number of CPU(s) required for performance monitoring of the AI/ML model within the time window does not exceed the number N_{MAX}-L of currently available CPU(s), the terminal device may perform performance monitoring of the AI/ML model. L is the number of the currently occupied CPU(s) (including CPU(s) reserved for the CSI report with higher priority than that for performance monitoring).

After the allocation is performed based on the priority level of the CSI report, if the number of CPU(s) required for performance monitoring of the AI/ML model exceeds the number N_{MAX}-L of CPU(s) currently available in the time window, the terminal device does not perform performance monitoring of the AI/ML model.

In an implementation, when the CPU allocation is performed according to the priority of the CSI reports, the priority of a CSI report used for monitoring the performance of the AI/ML model is higher than that of a CSI report for CSI obtained based on the AI/ML model. Since performance monitoring is a prerequisite for ensuring the reliability of the AI/ML model, the priority of performance monitoring is higher than the CSI output by the AI model. When the AI/ML model is unreliable, the output CSI is also unavailable. In addition, the priority of the CSI report for monitoring the performance of the AI/ML model is lower than that of reports for other CSI, for example, a report for CSI obtained based on other AI/ML models or a report for CSI obtained based on a non-AI/ML method (that is, a regular method).

### Embodiment 4

The Embodiment 4 may specifically include the following steps.

At S1, the terminal device reports the number N_{MAX} of simultaneously supported CPU(s) to the network device through UE capability information.

At S2, the terminal device receives a first signaling from the network device, and the first signaling is used for triggering the terminal device to implement an AI/ML-based CSI report, and the CSI report is used for online training of the AI/ML model.

It can be understood that the first signaling is specifically used to trigger online training of the AI/ML model.

The first signaling may be DCI signaling for triggering the AI/ML-based CSI report, but there is no actual CSI transmission in the CSI report, for example, reportQuantity is configured as None or Training in the CSI report configuration corresponding to the CSI report.

After receiving the first signaling, the terminal device may perform online training of the AI/ML model and update the AI/ML model according to the result of the online training to ensure the accuracy of the CSI output based on the AI/ML model. It should be noted that the terminal device may perform online training based on the dataset collected by itself or the dataset indicated in advance by the network device, thereby optimizing and adjusting the parameters of the AI/ML model and improving the accuracy of the output result.

At S3, the terminal device determines the number of CPU(s) occupied for the AI/ML-based CSI report (i.e. online training of the AI/ML model).

When the AI/ML-based CSI report includes online training of the AI/ML model, the number of occupied CPU(s) may be determined according to the size of the dataset used for online training, or the online training occupies all CPU(s) of the terminal device.

In an implementation, the complexity of online training and the number of CPU(s) that need to be occupied are determined based on the size of the dataset for online training. When the dataset is larger than a certain threshold, more CPUs are required to be occupied for the online training.

In another implementation, all CPUs of the terminal device are required to be occupied for the online training, that is, the number of CPU(s) occupied for the online training is the number N_{MAX} of CPU(s) simultaneously supported by the terminal device. Since the computational complexity of training is much higher than that of inference, the training process may require the full computing capability of the terminal device.

At S4, the terminal device determines a time window occupied by the CPU(s) occupied for the AI/ML-based CSI report.

The time window starts when the terminal device receives the first signaling and ends after the terminal device completes updating of the AI/ML model based on online training. Alternatively, the time window starts when the terminal device receives the first signaling and ends after the terminal device completes reporting of CSI based on the AI/ML model updated by online training.

That is, the time window starts from the last OFDM symbol of the PDCCH used to trigger the CSI report (that is, triggering online training) and ends after the terminal device completes updating the model parameter of the AI/ML model. Alternatively, the time window starts from the last OFDM symbol of the PDCCH used to trigger online training to the last OFDM symbol of the PUSCH carrying target CSI, wherein the target CSI is CSI inferred by the terminal device after updating parameters of the AI model based on the online training.

At S5, the terminal device determines whether to perform online training of the AI model based on the quantity and the time window.

When the number of CPU(s) required for online training of the AI/ML model does not exceed the number N_{MAX}-L of CPU(s) currently available in the time window after the allocation is performed based on the priority of the CSI report, the terminal device may perform online training of the AI/ML model. L is the number of the currently occupied CPU(s) within the time window (including CPU(s) reserved for the CSI report with higher priority than that for online training).

When the number of CPU(s) required for online training of the AI/ML model exceeds the number N_{MAX}-L of CPU(s) currently available in the time window after allocation is performed based on the priority level of the CSI report, the terminal device does not perform online training of the AI/ML model.

In an implementation, when the CPU allocation is performed according to the priority of the CSI reports, the priority of a CSI report for triggering the terminal device to perform online training is higher than a report of CSI obtained based on the AI/ML model. Since online training optimizes the AI/ML model, the priority of online training is higher than that of the CSI output by the AI/ML model. If the AI/ML model is unreliable, the output CSI is also unavailable.

In another implementation, the priority of a CSI report for triggering the terminal device to perform online training is higher than that of all other CSI reports. Since all CPUs may be occupied for online training, the priority of online training may be higher than that of all other CSI reports. When the terminal device needs to perform online training, all other CSI calculations need to be stopped.

In particular, when the number of CPU(s) occupied for the online training is the number N_{MAX} of CPU(s) simultaneously supported by the terminal device, that is, all CPUs need to be occupied, the terminal device performs the online training only when the number L of CPU(s) currently occupied in the time window is 0 (that is, no CPU is occupied), otherwise the online training is not performed.

In summary, the embodiment of the present disclosure provides an information processing method, in which a terminal device and/or a network device may determine the number of CPU(s) to be occupied for a first CSI report and a time window occupied by the CPU(s), thereby obtaining the processing capability required for the first CSI report. In this way, the terminal device can process the first CSI report according to its own processing capability and the processing capability required for the first CSI report, thereby efficiently utilizing the CPU(s) of the terminal device and improving communication performance. Accordingly, the network device may configure the terminal device to perform as much CSI calculation and/or CSI reporting as possible according to the processing capability required for the first CSI report without exceeding the processing capability of the terminal device, so as to improve communication performance.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solution of the present disclosure, and these simple modifications all fall within the scope of protection of the present disclosure. For example, various specific technical features described in the above-described detailed description can be combined in any suitable manner without contradiction, and various possible combinations will not be described separately here in order to avoid unnecessary repetition. For example, various embodiments may be combined arbitrarily, and as long as they do not violate the idea of the present disclosure, they should also be regarded as the disclosure of the present disclosure. For another example, on the premise that there is no conflict, each embodiment described in the present disclosure and/or the technical features in each embodiment can be arbitrarily combined with the prior art, and the technical solution obtained after the combination shall fall within the scope of protection of the present disclosure.

It should also be understood that in various method embodiments of the present disclosure, the size of the sequence number of the above-described processes does not mean the sequence of execution, and the sequence of execution of each process should be determined by its function and internal logic, and should not constitute any limitation to the implementation of the embodiments of the present disclosure. In addition, in the embodiment, the terms "downlink", "uplink", and "sidelink" are used to indicate the transmission direction of signals or data, where "downlink" is used to indicate that the transmission direction of signals or data is a first direction from a site to a UE of a cell, "uplink" is used to indicate that the transmission direction of signals or data is a second direction from a UE of a cell to a site, and "sidelink" is used to indicate that the transmission direction of signals or data is a third direction from UE 1 to UE 2. For example, "downlink signal" indicates that the transmission direction of the signal is the first direction. In addition, in the embodiments of the present disclosure, the term "and/or" describes an association relationship between associated objects, and indicates that there may be three types of relationships. Specifically, A and/or B may represent three cases of A alone, A and B simultaneously, and B alone. In addition, the character "/" herein generally indicates that the related objects before and after are in an "or" relationship.

FIG. 12 is a schematic diagram of the structure and composition of an information processing apparatus 1200 provided by an embodiment of the present disclosure, and is applied to a terminal device. As shown in FIG. 12, the information processing apparatus 1200 includes:
a first determining unit 1210, configured to determine a number of CPU(s) occupied for a first CSI report and a time window occupied by the CPU(s), the first CSI report being an AI/ML-based CSI report.

In some embodiments, the first determining unit 1210 is configured to determine the number of CPU(s) occupied for the first CSI report based on one or more of the following:
the number of inferences required for the first CSI report ;
information content of the first CSI report;
model information of a first model, the first model being used for implementing the first CSI report; and
a usage of the first CSI report.

In some embodiments, the number of CPU(s) occupied for the first CSI report may be a product of the number of inferences required for the first CSI report and a first value. The first value is the number of CPU(s) required to be occupied for the first model for one inference.

In some embodiments, the first value may be 1, or the first value may be reported by the terminal device to the network device through UE capability information.

In some embodiments, the UE capability information may include one or more of:
the number of CPU(s) that each AI/ML model among one or a plurality of AI/ML models supported by the terminal device needs to occupy for one inference, the one or the plurality of AI/ML models including the first model;
the number of CPU(s) that an AI/ML model corresponding to each model function among one or a plurality of model functions supported by the terminal device needs to occupy for one inference, the plurality of model functions including a model function of the first model; and
the number of CPU(s) required to be occupied for one inference for feeding back CSI and the number of CPU(s) required to be occupied for one inference for feeding back a model performance monitoring result, the first CSI report being used for feeding back the CSI or feeding back the model performance monitoring result.

In some embodiments, the information content of the first CSI report may include one or more of the following:
compressed channel information, positioning information, beam information, and a performance monitoring result of the first model.

In some embodiments, when the information content of the first CSI report is positioning information, the number of CPU(s) is a second value, the second value being a predefined value;
when the information content of the first CSI report is beam information, the number of the CPU(s) is a third value, the third value being a predefined value;
when the information content of the first CSI report is compressed channel information, the number of the CPU(s) is a fourth value, the fourth value being calculated based on the number of reference signal resources used for CSI measurement; and
when the information content of the first CSI report is a performance monitoring result of the first model, the number of CPU(s) is the number of inferences performed by the terminal device based on the first model during the performance monitoring process, or is 0.

In some embodiments, the model information of the first model may include one or more of the followings:
a type of a neural network applied to the first model;
the number of layers of the neural network applied to the first model; and
a structure of the neural network applied to the first model.

In some embodiments, the the usage of the first CSI report may include one or more of the followings:
for feeding back CSI;
for performance monitoring of the first model; and
for online training of the first model.

In some embodiments, when the first CSI report is used for feeding back CSI, the number of CPU(s) may be calculated based on the number of reference signal resources used for CSI measurement;
when the first CSI report is used for performance monitoring of the first model, the number of CPU(s) is the number of inferences performed by the terminal device based on the first model during performance monitoring; and
when the first CSI report is used for online training of the first model, the number of CPU(s) is a maximum number of CPU(s) simultaneously supported by the terminal device.

In some embodiments, the first CSI report is used for online training of the first model, and the number of CPU(s) occupied for the first CSI report is determined based on a size of a dataset used for online training, or the number of CPU(s) occupied for the first CSI report is a maximum number of CPU(s) simultaneously supported by the terminal device.

In some embodiments, when the first CSI report is used for feeding back CSI and/or feeding back a performance monitoring result of the first model, the time window occupied by the CPU(s) is determined based on a periodic configuration of the first CSI report. The periodic configuration of the first CSI report is configured by a network device.

In some embodiments, when the first CSI report is used for performance monitoring of the first model and the terminal device does not report a performance monitoring result,
the time window starts from a first time domain symbol of a first reference signal resource and ending at a K1-th time domain symbol after a last time domain symbol, the first reference signal resource being a reference signal resource for channel measurement of the first CSI report;
alternatively, the time window lasts for K2 time domain symbols starting from a last time domain symbol carrying first signaling, the first signaling being used to trigger the first CSI report;
K1 and/or K2 are predefined values.

In some embodiments, when the first CSI report is used for online training of the first model,
the time window starts from a last time domain symbol carrying first signaling until the terminal device completes updating the first model based on the online training;
alternatively, the time window starts from a last time domain symbol carrying first signaling until the terminal device transmits a second CSI report to the network device based on an updated first model, where the updated first model is obtained based on the online training process, and the first signaling is used to trigger the first CSI report.

In some embodiments, there is one or a plurality of first CSI reports, and the first determining unit 1210 is further configured to determine the number of currently available CPU(s) based on the number of the currently occupied CPU(s) and the maximum number of CPU(s) simultaneously supported by the terminal device, and determine whether to perform CSI measurement and reporting related to the first CSI report based on the number of CPU(s) occupied for the first CSI report, the time window occupied by the CPU(s), and the number of currently available CPU(s).

In some embodiments, when the number of CPU(s) occupied for the first CSI report does not exceed the number of currently available CPU(s) within the time window, the terminal device may perform CSI measurement and reporting related to the first CSI report;
when there is one first CSI report, if the number of CPU(s) occupied for the first CSI report exceeds the number of currently available CPU(s) within the time window, the terminal device may determine not to perform CSI measurement and reporting related to the first CSI report;
when there are a plurality of first CSI reports, if the number of CPU(s) occupied for the plurality of first CSI reports exceeds the number of currently available CPU(s) within the time window, the terminal device may only perform CSI measurement and reporting related to M first CSI reports having the highest priority among the plurality of first CSI reports;
M is a maximum value such that the number of CPU(s) occupied for M first CSI reports having the highest priority among the plurality of first CSI reports does not exceed the number of currently available CPU(s).

In some embodiments, the first determining unit 1210 is further configured to: determine the number of currently occupied CPU(s) based on the number of CPU(s) occupied for the first CSI report and the time window occupied by the CPU(s); determine the number of currently available CPU(s) based on the number of currently occupied CPU(s) and the maximum number of CPU(s) simultaneously supported by the terminal device; and determine whether to perform CSI measurement and reporting related to a third CSI report based on the number of the currently available CPU(s), the third CSI report having lower priority than the first CSI report, or the third CSI report being a CSI report triggered after the first CSI report.

In some embodiments, the first CSI report is used to trigger the performance monitoring of the first model, and the first determining unit 1210 is further configured to determine not to perform the performance monitoring of the first model when the number of currently available CPU(s) is less than the number of CPU(s) required for the performance monitoring of the first model within the time window.

In some embodiments, the first CSI report is used to trigger online training of the first model, and the first determining unit 1210 is further configured to determine not to perform online training on the first model when the number of currently available CPU(s) is less than the number of CPU(s) required for online training of the first model within the time window.

In some embodiments, a CSI report for triggering the terminal device to perform online training on the first model has a higher priority than a CSI report for CSI obtained based on the first model;
and/or,
a CSI report for performance monitoring of the first model has a higher priority than a CSI report for CSI obtained based on the first model.

In some embodiments, the information processing apparatus 1200 may further include a transmitting unit. The transmitting unit may be configured to transmit first information to the network device. The first information is used to indicate a maximum number of CPU(s) simultaneously supported by the terminal device.

FIG. 13 is a schematic diagram of the structure and composition of an information processing apparatus 1300 provided by an embodiment of the present disclosure, and is applied to a network device. As shown in FIG. 13, the information processing apparatus 1300 includes:
a second determining unit 1310, configured to determine the number of CPU(s) occupied for a first CSI report and a time window occupied by the CPU(s), the first CSI report being an AI/ML-based CSI report.

In some embodiments, the second determining unit 1310 is further configured to determine the number of CPU(s) occupied for the first CSI report based on one or more of the following:
the number of inferences required for the first CSI report ;
information content of the first CSI report;
model information of a first model, the first model being used for implementing the first CSI report; and
a usage of the first CSI report.

In some embodiments, the number of CPU(s) occupied for the first CSI report may be a product of the number of inferences required for the first CSI report and a first value. The first value is the number of CPU(s) required to be occupied for the first model for one inference.

In some embodiments, the first value may be 1, or the first value may be reported by the terminal device to the network device through UE capability information.

In some embodiments, the UE capability information may include one or more of:
the number of CPU(s) that each AI/ML model among one or a plurality of AI/ML models supported by the terminal device needs to occupy for one inference, the one or the plurality of AI/ML models including the first model;
the number of CPU(s) that an AI/ML model corresponding to each model function among one or a plurality of model functions supported by the terminal device needs to occupy for one inference, the plurality of model functions including a model function of the first model; and
the number of CPU(s) required to be occupied for one inference for feeding back CSI and the number of CPU(s) required to be occupied for one inference for feeding back a model performance monitoring result, the first CSI report being used for feeding back the CSI or feeding back the model performance monitoring result.

In some embodiments, the information content of the first CSI report may include one or more of the following:
compressed channel information, positioning information, beam information, and a performance monitoring result of the first model.

In some embodiments, when the information content of the first CSI report is positioning information, the number of CPU(s) is a second value, the second value being a predefined value;
when the information content of the first CSI report is beam information, the number of the CPU(s) is a third value, the third value being a predefined value;
when the information content of the first CSI report is compressed channel information, the number of the CPU(s) is a fourth value, the fourth value being calculated based on a number of reference signal resources used for CSI measurement; and
when the information content of the first CSI report is a performance monitoring result of the first model, the number of CPU(s) is the number of inferences performed by the terminal device based on the first model during the performance monitoring process, or is 0.

In some embodiments, the model information of the first model may include one or more of:
a type of a neural network applied to the first model;
the number of layers of the neural network applied to the first model; and
a structure of the neural network applied to the first model.

In some embodiments, the usage of the first CSI report may include one or more of the following:
for feeding back CSI;
for performance monitoring of the first model; and
for online training of the first model.

In some embodiments, when the first CSI report is used for feeding back CSI, the number of CPU(s) may be calculated based on the number of reference signal resources used for CSI measurement;
when the first CSI report is used for performance monitoring of the first model, the number of CPU(s) is the number of inferences performed by the terminal device based on the first model during performance monitoring; and
when the first CSI report is used for online training of the first model, the number of CPU(s) is a maximum number of CPU(s) simultaneously supported by the terminal device.

In some embodiments, the first CSI report is used for online training of the first model, and the number of CPU(s) occupied for the first CSI report is determined based on a size of a dataset used for online training, or the number of CPU(s) occupied for the first CSI report is a maximum number of CPU(s) simultaneously supported by the terminal device.

In some embodiments, when the first CSI report is used for feeding back CSI and/or feeding back a performance monitoring result of the first model, the time window occupied by the CPU(s) is determined based on a periodic configuration of the first CSI report. The periodic configuration of the first CSI report may be configured by the network device.

In some embodiments, when the first CSI report is used for performance monitoring of the first model and the terminal device does not report a performance monitoring result,
the time window starts from a first time domain symbol of a first reference signal resource and ending at a K1-th time domain symbol after a last time domain symbol, the first reference signal resource being a reference signal resource for channel measurement of the first CSI report;
alternatively, the time window lasts for K2 time domain symbols starting from a last time domain symbol carrying first signaling, the first signaling being used to trigger the first CSI report;
K1 and/or K2 are predefined values.

In some embodiments, where the first CSI report is used for online training of the first model,
the time window starts from a last time domain symbol carrying first signaling until the terminal device completes updating the first model based on online training;
alternatively, the time window starts from a last time domain symbol carrying first signaling until the terminal device transmits a second CSI to the network device based on an updated first model, where the updated first model is obtained based on the online training process, and the first signaling is used to trigger the first CSI report.

In some embodiments, the second determining unit 1310 is further configured to: determine the number of currently occupied CPU(s) based on the number of CPU(s) occupied for the first CSI report and the time window occupied by the CPU(s); and configure and trigger other CSI reports based on the number of the currently occupied CPU(s) and the maximum number of CPU(s) simultaneously supported by the terminal device.

In some embodiments, the number of CPU(s) occupied for other CSI reports configured or triggered by the network device is not greater than the maximum number of CPU(s) simultaneously supported by the terminal device minus the number of the currently occupied CPU(s).

In some embodiments, the information processing apparatus 1300 may further include a receiving unit which may be configured to receive first information. The first information is used to indicate a maximum number of CPU(s) simultaneously supported by the terminal device.

Those skilled in the art should understand that the related description of the above-described information compression apparatuses according to the embodiments of the present disclosure can be understood with reference to the related description of the information compression methods according to the embodiments of the present disclosure.

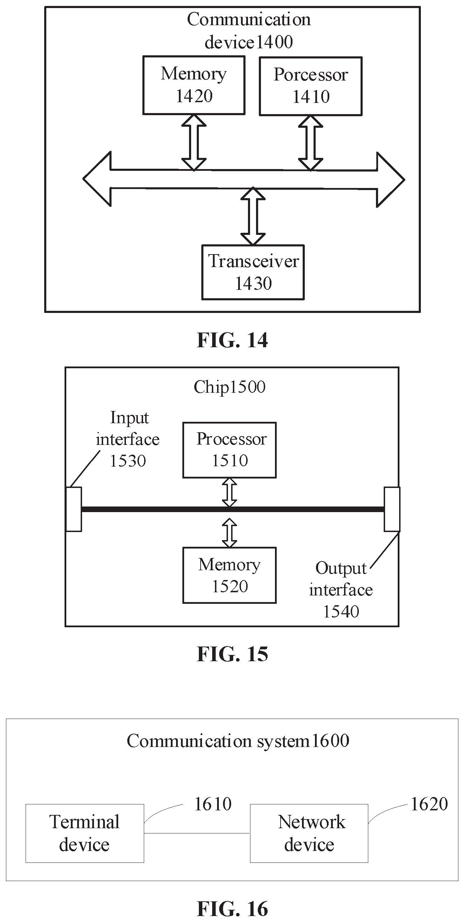

FIG. 14 is a schematic structural diagram of a communication device 1400 according to an embodiment of the present disclosure. The communication device may be a terminal device or a network device. The communication device 1400 illustrated in FIG. 14 includes a processor 1410, and the processor 1110 may call and run a computer program from a memory to implement the methods in the embodiments of the present disclosure.

Optionally, as shown in FIG. 14, the communication device 1400 may further include a memory 1420. The processor 1410 may call and run a computer program from the memory 1420 to implement the methods in the embodiments of the present disclosure.

The memory 1420 may be a separate device independent of the processor 1410 or may be integrated in the processor 1410.

Optionally, as shown in FIG. 14, the communication device 1400 may further include a transceiver 1430, and the processor 1410 may control the transceiver 1430 to communicate with other devices, specifically, may transmit information or data to other devices, or receive information or data from other devices.

Here, the transceiver 1430 may include a transmitter and a receiver. The transceiver 1430 may further include antennas, and there may be one or multiple antennas.

Optionally, the communication device 1400 may be a network device according to the embodiment of the present disclosure, and the communication device 1400 may implement corresponding processes implemented by the network device in each method according to the embodiments of the present disclosure, and will not be repeated for conciseness.

Optionally, the communication device 1400 may specifically be a mobile terminal/terminal device according to the embodiments of the present disclosure, and the communication device 1400 may implement corresponding processes implemented by the mobile terminal/terminal device in each method according to the embodiments of the present disclosure, and will not be described herein for the sake of conciseness.

FIG. 15 is a schematic structural diagram of a chip according to an embodiment of the present disclosure. The chip 1500 shown in FIG. 15 includes a processor 1510, which may call and run a computer program from a memory to implement the methods in the embodiments of the present disclosure.

Optionally, as shown in FIG. 15, the chip 1500 may further include a memory 1520. The processor 1510 may call and run a computer program from the memory 1220 to implement the methods in the embodiments of the present disclosure.

The memory 1520 may be a separate device independent of the processor 1510 or may be integrated in the processor 1510.

Optionally, the chip 1500 may further include an input interface 1530. The processor 1510 may control the input interface 1530 to communicate with other devices or chips, specifically, may acquire information or data transmitted by other devices or chips.

Optionally, the chip 1500 may further include an output interface 1540. The processor 1510 may control the output interface 1540 to communicate with other devices or chips, specifically, may output information or data to other devices or chips.

Optionally, the chip may be applied to the network device in the embodiment of the present disclosure, and the chip may implement the corresponding process implemented by the network device in each method of the embodiments of the present disclosure, and will not be repeated here for the sake of brevity.

Optionally, the chip may be applied to the mobile terminal/terminal device in the embodiments of the present disclosure, and the chip may implement the corresponding process implemented by the mobile terminal/terminal device in each method of the embodiments of the present disclosure, and will not be repeated here for the sake of brevity.

It should be understood that the chip mentioned in the embodiments of the present disclosure may also be referred to as a system-level chip, a system chip, a chip system, or a system-on-chip.

FIG. 16 is a schematic block diagram of a communication system 1600 according to an embodiment of the present disclosure. As shown in FIG. 16, the communication system 1600 includes a terminal device 1610 and a network device 1620.

Here, the terminal device 1610 may be used to implement the corresponding functions implemented by the terminal device in the above-described methods, and the network device 1620 may be used to implement the corresponding functions implemented by the network device in the above-described methods, which will not be repeated here for brevity.

It should be understood that the processor of the embodiments of the present disclosure may be an integrated circuit chip having signal processing capabilities. In the implementation process, the steps of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, steps, and logical block diagrams in the embodiments of the present disclosure may be implemented or executed. The general-purpose processor may be a microprocessor or the processor may be any regular processor or the like. The steps of the methods described in connection with the embodiments of the present disclosure may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor may read the information in the memory, and combine its hardware to complete the steps of the above methods.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

An embodiment of the present disclosure also provides a computer-readable storage medium for storing a computer program.

Optionally, the computer-readable storage medium may be applied to the network device in the embodiments of the present disclosure, and the computer program may cause the computer to execute the corresponding process implemented by the network device in each method in the embodiments of the present disclosure, and the description thereof will not be repeated here for the sake of brevity.

Optionally, the computer-readable storage medium may be applied to the mobile terminal/terminal device in the embodiments of the present disclosure, and the computer program may cause the computer to execute the corresponding process implemented by the mobile terminal/terminal device in each method of the embodiments of the present disclosure, and will not be repeated here for the sake of brevity.

An embodiment of the present disclosure also provides a computer program product including computer program instructions.

Optionally, the computer program product may be applied to the network device in the embodiments of the present disclosure, and the computer program instructions may cause the computer to execute the corresponding process implemented by the network device in each method in the embodiments of the present disclosure, and the description thereof will not be repeated here for the sake of brevity.

Optionally, the computer program product may be applied to the mobile terminal/terminal device in the embodiments of the present disclosure, and the computer program instruction may cause the computer to execute the corresponding process implemented by the mobile terminal/terminal device in each method of the embodiments of the present disclosure, and will not be repeated here for the sake of brevity.

An embodiment of the present disclosure also provides a computer program.

Optionally, the computer program may be applied to the network device in the embodiments of the present disclosure, and when the computer program is run on the computer, the computer may execute the corresponding process implemented by the network device in each method of the embodiments of the present disclosure. The description thereof is not repeated here for the sake of brevity.

Optionally, the computer program may be applied to the mobile terminal/terminal device in the embodiments of the present disclosure, and when the computer program is run on the computer, the computer may execute the corresponding process implemented by the mobile terminal/terminal device in each method of the embodiments of the present disclosure, which is not repeated here for the sake of brevity.

Those of ordinary skill in the art will appreciate that the elements and algorithmic steps of the various examples described in connection with the embodiments herein can be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that for convenience and conciseness of the description, the specific working processes of the systems, devices, and units described above may refer to the corresponding processes in the aforementioned method embodiments, and will not be repeatedly described herein.

In several embodiments provided herein, it should be understood that the described systems, apparatuses, and methods may be implemented in other ways. For example, the device embodiments described above are merely schematic, for example, the division of units is only logical functional division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through an interface, device or unit, which may be electrical, mechanical or otherwise.

The units described as separate units may be or may not be physically separate, and the units displayed as units may be or may not be physical units, that is, they may be located in one place or may be distributed over a plurality of network units. Some or all of the units may be selected according to actual needs to achieve the purpose of the solution of the embodiments.

In addition, each functional unit in each embodiment of the present disclosure may be integrated in one processing unit, each unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or the part that contributes to the prior art or a part of the technical solution may be embodied in the form of a software product. The computer program product is stored in a storage medium and includes several instructions for causing a computer device (which may be a personal computer, a server, or a network device, etc.) to perform all or part of the steps of the method described in various embodiments of the present disclosure. The storage medium includes a USB disk, a removable hard disk, a Read-Only Memory (ROM), a Random Access Memory (RAM), a magnetic disk, or an optical disk that can store a program code.

The above is merely specific embodiments of the present disclosure, but the scope of protection of the present disclosure is not limited thereto. Any person skilled in the art can easily think of changes or substitutions within the technical scope of the present disclosure, which should be covered within the scope of protection of the present disclosure. Therefore, the scope of protection of the present disclosure should be subject to the scope of protection of the claims.

## Claims

1. An information processing method, comprising:
determining, by a terminal device, a number of channel state information (CSI) processing unit(s) (CPU) occupied for a first CSI report and a time window occupied by the CPU(s), wherein the first CSI report is an Artificial Intelligence (Al)/Machine Learning (ML)-based CSI report.

2. The method of claim 1, wherein the terminal device determines the number of the CPU(s) occupied for the first CSI report based on one or more of followings:
a number of inferences required for the first CSI report;
information content of the first CSI report;
model information of a first model, wherein the first model is used for implementing the first CSI report; and
a usage of the first CSI report.

3. The method of claim 2, wherein the number of the CPU(s) occupied for the first CSI report, which is determined by the terminal device based on the number of inferences required for the first CSI report, comprises:
the number of the CPU(s) occupied for the first CSI report is a product of the number of inferences required for the first CSI report and a first value, wherein the first value is a number of CPU(s) required to be occupied for the first model for one inference.

4. The method of claim 3, wherein
the first value is 1, or the first value is reported by the terminal device to a network device through UE capability information.

5. The method of claim 4, wherein the UE capability information comprises one or more of:
a number of CPU(s) that each AI/ML model among one or a plurality of AI/ML models supported by the terminal device needs to occupy for one inference, wherein the one or the plurality of AI/ML models comprise the first model;
a number of CPU(s) that an AI/ML model corresponding to each model function among one or a plurality of model functions supported by the terminal device needs to occupy for one inference, wherein the plurality of model functions comprise a model function of the first model; and
a number of CPU(s) required to be occupied for one inference for feeding back CSI and a number of CPU(s) required to be occupied for one inference for feeding back a model performance monitoring result, wherein the first CSI report is used for feeding back the CSI or feeding back the model performance monitoring result.

6. The method of any one of claims 2-5, wherein the information content of the first CSI report comprises one or more of followings:
compressed channel information, positioning information, beam information, and a performance monitoring result of the first model.

7. The method of any one of claims 2-6, wherein the number of the CPU(s) occupied for the first CSI report, which is determined by the terminal device based on the information content of the first CSI report, comprises one or more of followings:
when the information content of the first CSI report is positioning information, the number of the CPU(s) is a second value, the second value being a predefined value;
when the information content of the first CSI report is beam information, the number of the CPU(s) is a third value, the third value being a predefined value;
when the information content of the first CSI report is compressed channel information, the number of the CPU(s) is a fourth value, the fourth value being calculated based on a number of reference signal resources used for CSI measurement; and
when the information content of the first CSI report is a performance monitoring result of the first model, the number of CPU(s) is a number of inferences performed by the terminal device based on the first model during a performance monitoring process, or is 0.

8. The method of any one of claims 2-7, wherein the model information of the first model comprises one or more of:
a type of a neural network applied to the first model;
a number of layers of the neural network applied to the first model; and
a structure of the neural network applied to the first model.

9. The method of any one of claims 2-8, wherein the usage of the first CSI report comprises one or more of:
for feeding back CSI;
for performance monitoring of the first model; and
for online training of the first model.

10. The method of any one of claims 2-9, wherein the number of the CPU(s) occupied for the first CSI report, which is determined by the terminal device based on the usage of the first CSI report, comprises:
when the first CSI report is used for feeding back CSI, the number of the CPU(s) is calculated based on a number of reference signal resources used for CSI measurement;
when the first CSI report is used for performance monitoring of the first model, the number of CPU(s) is a number of inferences performed by the terminal device based on the first model during the performance monitoring; and
when the first CSI report is used for online training of the first model, the number of CPU(s) is a maximum number of CPU(s) simultaneously supported by the terminal device.

11. The method of claim 1, wherein the first CSI report is used for online training of a first model, the first model being used for the first CSI report; the number of the CPU(s) occupied for the first CSI report is determined based on a size of a dataset used for the online training, or the number of the CPU(s) occupied for the first CSI report is a maximum number of CPU(s) simultaneously supported by the terminal device.

12. The method of any one of claims 1-11, wherein determining the time window occupied by the CPU(s) comprises:
when the first CSI report is used for feeding back CSI and/or feeding back a performance monitoring result of the first model, determining the time window occupied by the CPU(s) based on a periodic configuration of the first CSI report, wherein the periodic configuration of the first CSI report is configured by a network device.

13. The method of any one of claims 1-11, wherein determining the time window occupied by the CPU(s) comprises:
when the first CSI report is used for performance monitoring of the first model and the terminal device does not report a performance monitoring result,
determining the time window as starting from a first time domain symbol of a first reference signal resource and ending at a K1-th time domain symbol after a last time domain symbol, wherein the first reference signal resource is a reference signal resource for channel measurement of the first CSI report; or,
determining the time window as lasting for K2 time domain symbols starting from a last time domain symbol carrying first signaling, wherein the first signaling is used to trigger the first CSI report,
wherein K1 and/or K2 are predefined values.

14. The method of any one of claims 1-11, wherein determining the time window occupied by the CPU(s) comprises:
when the first CSI report is used for online training of a first model,
determining the time window as starting from a last time domain symbol carrying first signaling until the terminal device completes updating the first model based on the online training; or,
determining the time window as starting from a last time domain symbol carrying first signaling until the terminal device transmits a second CSI report to a network device based on an updated first model, wherein the updated first model is obtained based on the online training, and the first signaling is used to trigger the first CSI report.

15. The method of any one of claims 1-14, further comprising:
determining, by the terminal device, a number of currently available CPU(s) based on a number of currently occupied CPU(s) and a maximum number of CPU(s) simultaneously supported by the terminal device; and
determining, by the terminal device, whether to perform CSI measurement and reporting related to the first CSI report based on the number of the CPU(s) occupied for the first CSI report, the time window occupied by the CPU(s), and the number of the currently available CPU(s).

16. The method of claim 15, wherein determining, by the terminal device, whether to perform CSI measurement and reporting related to the first CSI report based on the number of the CPU(s) occupied for the first CSI report, the time window occupied by the CPU(s), and the number of the currently available CPU(s) comprises:
when the number of the CPU(s) occupied for the first CSI report does not exceed the number of the currently available CPU(s) within the time window, performing, by the terminal device, the CSI measurement and reporting related to the first CSI report;
when there is one first CSI report and the number of the CPU(s) occupied for the first CSI report exceeds the number of the currently available CPU(s) within the time window, determining, by the terminal device, to not perform the CSI measurement and reporting related to the first CSI report; and
when there are a plurality of first CSI reports and the number of the CPU(s) occupied for the plurality of first CSI reports exceeds the number of the currently available CPU(s) within the time window, performing, by the terminal device, only CSI measurement and reporting related to M first CSI reports having highest priority among the plurality of first CSI reports,
wherein M is a maximum value such that a number of CPU(s) occupied for the M first CSI reports having the highest priority among the plurality of first CSI reports does not exceed the number of the currently available CPU(s).

17. The method of any one of claims 1-16, further comprising:
determining, by the terminal device, a number of currently occupied CPU(s) based on the number of CPU(s) occupied for the first CSI report and the time window occupied by the CPU(s);
determining, by the terminal device, a number of currently available CPU(s) based on the number of the currently occupied CPU(s) and the maximum number of the CPU(s) simultaneously supported by the terminal device; and
determining, by the terminal device, whether to perform CSI measurement and reporting related to a third CSI report based on the number of the currently available CPU(s), wherein the third CSI report has a lower priority than the first CSI report, or the third CSI report is a CSI report triggered after the first CSI report.

18. The method of any one of claims 1-17, wherein the first CSI report is used to trigger performance monitoring of a first model,
the method further comprises:
when a number of currently available CPU(s) is less than a number of CPU(s) required for performance monitoring of the first model within the time window, determining, by the terminal device, to not perform performance monitoring of the first model.

19. The method of any one of claims 1-18, wherein the first CSI report is used to trigger online training of a first model,
the method further comprises:
when a number of currently available CPU(s) is less than a number of CPU(s) required for online training of the first model within the time window, determining, by the terminal device, to not perform online training on the first model.

20. The method of claim 16 or 17, wherein
a priority of a CSI report for triggering the terminal device to perform online training on a first model is higher than a priority of a CSI report for CSI obtained based on the first model; and/or,
a priority of a CSI report for performance monitoring of a first model is higher than a priority of a CSI report for CSI obtained based on the first model.

21. The method of claim 16 or 17, further comprising:
transmitting, by the terminal device, first information to a network device, wherein the first information is used to indicate the maximum number of the CPU(s) simultaneously supported by the terminal device.

22. An information processing method, comprising:
determining, by a network device, a number of channel state information (CSI) processing unit(s) (CPU) occupied for a first CSI report and a time window occupied by the CPU(s), wherein the first CSI report is an Artificial Intelligence (Al)/Machine Learning (ML)-based CSI report.

23. The method of claim 22, wherein the network device determines the number of the CPU(s) occupied for the first CSI report based on one or more of followings:
a number of inferences required for the first CSI report;
information content of the first CSI report;
model information of a first model, wherein the first model is used for implementing the first CSI report; and
a usage of the first CSI report.

24. The method of claim 23, wherein the number of the CPU(s) occupied for the first CSI report, which is determined by the network device based on the number of inferences required for the first CSI report, comprises:
the number of the CPU(s) occupied for the first CSI report is a product of the number of inferences required for the first CSI report and a first value, wherein the first value is a number of CPU(s) required to be occupied for the first model for one inference.

25. The method of claim 24, wherein
the first value is 1, or the first value is reported by a terminal device to the network device through UE capability information.

26. The method of claim 25, wherein the UE capability information comprises one or more of:
a number of CPU(s) that each AI/ML model among one or a plurality of AI/ML models supported by the terminal device needs to occupy for one inference, wherein the one or the plurality of AI/ML models comprise the first model;
a number of CPU(s) that an AI/ML model corresponding to each model function among one or a plurality of model functions supported by the terminal device needs to occupy for one inference, wherein the plurality of model functions comprise a model function of the first model; and
a number of CPU(s) required to be occupied for one inference for feeding back CSI and a number of CPU(s) required to be occupied for one inference for feeding back a model performance monitoring result, wherein the first CSI report is used for feeding back the CSI or feeding back the model performance monitoring result.

27. The method of any one of claims 23-26, wherein the information content of the first CSI report comprises one or more of followings:
compressed channel information, positioning information, beam information, and a performance monitoring result of the first model.

28. The method of any of claims 23-27, wherein the number of the CPU(s) occupied for the first CSI report, which is determined by the network device based on the information content of the first CSI report, comprises one or more of followings:
when the information content of the first CSI report is positioning information, the number of the CPU(s) is a second value, the second value being a predefined value;
when the information content of the first CSI report is beam information, the number of the CPU(s) is a third value, the third value being a predefined value;
when the information content of the first CSI report is compressed channel information, the number of the CPU(s) is a fourth value, the fourth value being calculated based on a number of reference signal resources used for CSI measurement; and
when the information content of the first CSI report is a performance monitoring result of the first model, the number of CPU(s) is a number of inferences performed by the terminal device based on the first model during a performance monitoring process, or is 0.

29. The method of any one of claims 23-28, wherein the model information of the first model comprises one or more of:
a type of a neural network applied to the first model;
a number of layers of the neural network applied to the first model; and
a structure of the neural network applied to the first model.

30. The method of any one of claims 23-29, wherein the usage of the first CSI report comprises one or more of:
for feeding back CSI;
for performance monitoring of the first model; and
for online training of the first model.

31. The method of any one of claims 23-30, wherein the number of the CPU(s) occupied for the first CSI report, which is determined by the network device based on the usage of the first CSI report, comprises:
when the first CSI report is used for feeding back CSI, the number of the CPU(s) is calculated based on a number of reference signal resources used for CSI measurement;
when the first CSI report is used for performance monitoring of the first model, the number of CPU(s) is a number of inferences performed by a terminal device based on the first model during the performance monitoring; and
when the first CSI report is used for online training of the first model, the number of CPU(s) is a maximum number of CPU(s) simultaneously supported by the terminal device.

32. The method of claim 22, wherein the first CSI report is used for online training of a first model, the first model being used for the first CSI report; the number of the CPU(s) occupied for the first CSI report is determined based on a size of a dataset used for the online training, or the number of the CPU(s) occupied for the first CSI report is a maximum number of CPU(s) simultaneously supported by a terminal device.

33. The method of any one of claims 22-32, wherein determining the time window occupied by the CPU(s) comprises:
when the first CSI report is used for feeding back CSI and/or feeding back a performance monitoring result of the first model, determining the time window occupied by the CPU(s) based on a periodic configuration of the first CSI report, wherein the periodic configuration of the first CSI report is configured by the network device.

34. The method of any one of claims 22-33, wherein determining the time window occupied by the CPU(s) comprises:
when the first CSI report is used for performance monitoring of the first model and a terminal device does not report a performance monitoring result,
determining the time window as starting from a first time domain symbol of a first reference signal resource and ending at a K1-th time domain symbol after a last time domain symbol, wherein the first reference signal resource is a reference signal resource for channel measurement of the first CSI report; or,
determining the time window as lasting for K2 time domain symbols starting from a last time domain symbol carrying first signaling, wherein the first signaling is used to trigger the first CSI report,
wherein K1 and/or K2 are predefined values.

35. The method of any one of claims 22-32, wherein determining the time window occupied by the CPU(s) comprises:
when the first CSI report is used for online training of the first model,
determining the time window as starting from a last time domain symbol carrying first signaling until a terminal device completes updating the first model based on the online training; or,
determining the time window as starting from a last time domain symbol carrying first signaling until a terminal device transmits a second CSI report to the network device based on an updated first model, wherein the updated first model is obtained based on the online training, and the first signaling is used to trigger the first CSI report.

36. The method of any one of claims 22-35, further comprising:
determining, by the network device, a number of currently occupied CPU(s) based on the number of CPU(s) occupied for the first CSI report and the time window occupied by the CPU(s); and
configuring and triggering, by the network device, other CSI reports based on the number of the currently occupied CPU(s) and a maximum number of CPU(s) simultaneously supported by a terminal device.

37. The method of claim 36, wherein
a number of CPU(s) occupied for the other CSI reports configured or triggered by the network device is not greater than the maximum number of the CPU(s) simultaneously supported by the terminal device minus the number of the currently occupied CPU(s).

38. The method of claim 36 or 37, further comprising:
receiving, by the network device, first information, wherein the first information is used to indicate the maximum number of the CPU(s) simultaneously supported by the terminal device.

39. An information processing apparatus, implemented by a terminal device, the apparatus comprising:
a first determining unit, configured to determine a number of channel state information (CSI) processing unit(s) (CPU) occupied for a first CSI report and a time window occupied by the CPU(s), wherein the first CSI report is an Artificial Intelligence (Al)/Machine Learning (ML)-based CSI report.

40. An information processing apparatus, implemented by a network device, the apparatus comprising:
a second determining unit, configured to determine a number of channel state information (CSI) processing unit(s) (CPU) occupied for a first CSI report and a time window occupied by the CPU(s), wherein the first CSI report is an Artificial Intelligence (Al)/Machine Learning (ML)-based CSI report.

41. A terminal device, comprising:
a memory for storing computer-executable instructions;
a processor, coupled to the memory, for implementing the method of any one of claims 1 to 21 by executing the computer-executable instructions.

42. A network device, comprising:
a memory for storing computer-executable instructions;
a processor, coupled to the memory, for implementing the method of any one of claims 22 to 38 by executing the computer-executable instructions.

43. A chip, comprising:
a processor for invoking and running a computer program from a memory to enable a device on which the chip is mounted to perform the method of any one of claims 1 to 21 or the method of any one of claims 22 to 38.

44. A computer-readable storage medium, have a computer program stored thereon that, when executed by at least one processor, implements the method of any one of claims 1 to 21 or the method of any one of claims 22 to 38.

45. A computer program product, comprising a computer storage medium which has stored a computer program comprising instructions executable by at least one processor that, when executed by the at least one processor, implement the method of any one of claims 1 to 21 or the method of any one of claims 22 to 38.

46. A computer program that causes a computer to perform the method of any one of claims 1 to 21 or the method of any one of claims 22 to 38.
